# EUROPÄISCHE PATENTSCHRIFT

(11) **EP 3 787 841 B1**
(45) Veröffentlichungstag und Bekanntmachung des Hinweises auf die Patenterteilung: **07.06.2023**
(21) Anmeldenummer: 19714392.8
(22) Anmeldetag: 27.03.2019
(51) Int. Cl.: B25F 5/00, B23B 45/00

(54) **WERKZEUGMASCHINENVORRICHTUNG**
POWER TOOL DEVICE
ENSEMBLE MACHINE-OUTIL

(30) Priorität: 04.05.2018 DE 102018206866
(43) Veröffentlichungstag der Anmeldung: 10.03.2021
(73) Patentinhaber: Robert Bosch GmbH, 70442 Stuttgart (DE)
(72) Erfinder: HILLER, Jan, 72622 Nuertingen (DE); VIGH, Andras, 3529 Miskolc (HU); SOLTESZ, Janos, 4075 Görbehaza (HU); BOHNE, Ulrich, 72664 Kohlberg (DE)
(86) Internationale Anmeldenummer: PCT/EP2019/057691
(87) Internationale Veröffentlichungsnummer: WO 2019/211046

(56) Entgegenhaltungen:
- EP-A2- 1 787 765
- EP-A2- 2 762 278
- DE-A1- 2 412 935
- GB-A- 2 058 253
- GB-A- 2 471 948

## Beschreibung

Die Erfindung betrifft eine Werkzeugmaschinenvorrichtung gemäß dem Oberbegriff des Patentanspruchs 1. Eine derartige Werkzeugmaschinenvorrichtung geht beispielsweise aus der GB 2 058 253 A hervor.

### Stand der Technik

Es ist bereits eine Werkzeugmaschinenvorrichtung mit zumindest einer Antriebsstrangeinheit, die zumindest ein Gangschaltelement umfasst und die zumindest zwei verschiedene Drehrichtungsmodi und zumindest zwei verschiedene Geschwindigkeitsmodi aufweist, und mit zumindest einer zumindest teilweise an der Antriebsstrangeinheit angeordneten Schalteinheit, vorgeschlagen worden.

### Offenbarung der Erfindung

Die Erfindung sieht eine Werkzeugmaschinenvorrichtung gemäß dem Patentanspruch 1 vor.

Es wird ausgegangen von einer Werkzeugmaschinenvorrichtung mit zumindest einer Antriebsstrangeinheit, die zumindest ein Gangschaltelement umfasst und die zumindest zwei verschiedene Drehrichtungsmodi und zumindest zwei verschiedene Geschwindigkeitsmodi aufweist, und mit zumindest einer zumindest teilweise an der Antriebsstrangeinheit angeordneten Schalteinheit.

Es wird vorgeschlagen, dass die Schalteinheit zumindest ein Betätigungselement, das zu einer Auswahl der Drehrichtungsmodi und der Geschwindigkeitsmodi vorgesehen ist, und zumindest ein Schaltelement umfasst, das dazu vorgesehen ist, in Abhängigkeit von einer Schaltstellung des Betätigungselements zwischen den Drehrichtungsmodi zu schalten.

Die Werkzeugmaschinenvorrichtung ist insbesondere zu einem Einsatz in einer Werkzeugmaschine, insbesondere einer Handwerkzeugmaschine, vorgesehen. Die Werkzeugmaschine ist vorzugsweise als ein Elektroschrauber, insbesondere als ein Akkuelektroschrauber, ausgebildet. Die Antriebsstrangeinheit umfasst vorzugsweise zumindest ein Getriebe. Das Getriebe ist bevorzugt als ein Planetengetriebe ausgebildet. Das Getriebe ist vorzugsweise zumindest teilweise innerhalb zumindest eines Getriebegehäuses der Antriebsstrangeinheit angeordnet. Die Antriebsstrangeinheit umfasst vorzugsweise zumindest einen Motor. Der Motor ist vorzugsweise als ein Elektromotor, insbesondere als ein Gleichstromelektromotor, ausgebildet. Das Getriebe ist vorzugsweise dazu vorgesehen, zumindest eine Bewegungskenngröße des Motors zu ändern. Die Bewegungskenngröße des Motors ist vorzugsweise als eine Drehrichtung des Motors, eine Drehgeschwindigkeit des Motors oder als eine andere, einem Fachmann als sinnvoll erscheinende Kenngröße ausgebildet. Eine Drehrichtung des Motors ist insbesondere eine Richtung, um die sich eine Antriebswelle, insbesondere eine Rotorwelle, des Motors um eine Antriebsachse des Motors dreht. Eine Drehgeschwindigkeit des Motors ist insbesondere eine Geschwindigkeit, mit der sich die Antriebswelle, insbesondere die Rotorwelle, des Motors um die Antriebsachse des Motors dreht. Vorzugsweise ist das Getriebe mit dem Motor, insbesondere mit der Antriebswelle des Motors, gekoppelt. Unter "vorgesehen" soll insbesondere speziell programmiert, speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Antriebsstrangeinheit, insbesondere das Getriebe, ist vorzugsweise dazu vorgesehen, zumindest eine Bewegungskenngröße des Motors, insbesondere nach einer Änderung der Bewegungskenngröße, auf eine Abtriebswelle der Werkzeugmaschine zu übertragen. Die Abtriebswelle ist vorzugsweise mit der Antriebsstrangeinheit, insbesondere mit dem Getriebe, gekoppelt. Insbesondere ragt die Abtriebswelle zumindest abschnittsweise in das Getriebegehäuse hinein. An der Abtriebswelle sind/ist insbesondere eine Werkzeugaufnahme der Werkzeugmaschine zu einer Aufnahme eines Einsatzwerkzeugs und/oder ein Einsatzwerkzeug der Werkzeugmaschine angeordnet. Die Werkzeugaufnahme ist vorzugsweise als ein Werkzeugfutter, insbesondere als ein Spannbackenfutter, ausgebildet. Das Einsatzwerkzeug ist insbesondere als ein Schrauberbit, als ein Bohrer o. dgl. ausgebildet. Vorzugsweise ist die Abtriebswelle zu einem, insbesondere um eine Abtriebsachse der Werkzeugmaschine rotierenden, Antrieb der Werkzeugaufnahme und/oder des Einsatzwerkzeugs vorgesehen. Vorzugsweise verläuft die Abtriebsachse der Werkzeugmaschine zumindest im Wesentlichen parallel, insbesondere koaxial, zur Antriebsachse des Motors. Vorzugsweise verläuft die Abtriebsachse zumindest im Wesentlichen entlang einer Längsachse der Abtriebswelle. Eine Längsachse eines, insbesondere zumindest im Wesentlichen zylinderförmigen, Objekts ist insbesondere eine Achse, welche zumindest im Wesentlichen senkrecht zu einer durch Zylinderradien des Objekts aufgespannten Querschnittsfläche des Objekts ausgerichtet ist. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Die Antriebsstrangeinheit, insbesondere der Motor und/oder das Getriebe, weist vorzugsweise zumindest einen ersten Drehrichtungsmodus und zumindest einen zweiten Drehrichtungsmodus auf. Insbesondere weist der Motor zumindest einen ersten Drehrichtungsmodus auf, der insbesondere einer ersten Drehrichtung der Antriebswelle des Motors um die Antriebsachse entspricht. Insbesondere weist der Motor zumindest einen zweiten Drehrichtungsmodus auf, der insbesondere einer zweiten, der ersten Drehrichtung entgegengesetzten Drehrichtung der Antriebswelle des Motors um die Antriebsachse entspricht. Vorzugsweise ist das Getriebe dazu vorgesehen, die Abtriebswelle entsprechend der Drehrichtung des Motors anzutreiben. Vorzugsweise ist das Getriebe in dem ersten Drehrichtungsmodus dazu vorgesehen, die Abtriebswelle in einer ersten Drehrichtung der Abtriebswelle rotierend um die Abtriebsachse anzutreiben. Vorzugsweise kann eine Rotation der Abtriebswelle in der ersten Drehrichtung um die Abtriebsachse einem Rechtslauf der Abtriebswelle entsprechen. Vorzugsweise ist das Getriebe in dem zweiten Drehrichtungsmodus dazu vorgesehen, die Abtriebswelle in einer zweiten, insbesondere der ersten Drehrichtung entgegengesetzten, Drehrichtung der Abtriebswelle rotierend um die Abtriebsachse anzutreiben. Vorzugsweise kann eine Rotation der Abtriebswelle in der zweiten Drehrichtung um die Abtriebsachse einem Linkslauf der Abtriebswelle entsprechen. Vorzugsweise ist die Werkzeugmaschine in dem ersten Drehrichtungsmodus zu einem Einschrauben einer Schraube in ein Werkstück und/oder zu einem Bohren in das Werkstück vorgesehen. Vorzugsweise ist die Werkzeugmaschine in dem zweiten Drehrichtungsmodus zu einem Ausschrauben einer Schraube aus einem Werkstück vorgesehen sein.

Die Antriebsstrangeinheit, insbesondere das Getriebe und/oder der Motor, weist vorzugsweise zumindest einen ersten Geschwindigkeitsmodus und einen zweiten Geschwindigkeitsmodus auf. Insbesondere weist das Getriebe zumindest einen ersten Geschwindigkeitsmodus und zumindest einen zweiten Geschwindigkeitsmodus auf, wobei die Geschwindigkeitsmodi insbesondere unterschiedlichen Schaltstellungen des Getriebes entsprechen. Vorzugsweise ist das Getriebe in dem ersten Geschwindigkeitsmodus dazu vorgesehen, die Abtriebswelle mit einer ersten Drehgeschwindigkeit der Abtriebswelle rotierend um die Abtriebsachse anzutreiben. Vorzugsweise ist das Getriebe in dem zweiten Geschwindigkeitsmodus dazu vorgesehen, die Abtriebswelle mit einer zweiten Drehgeschwindigkeit der Abtriebswelle rotierend um die Abtriebsachse anzutreiben. Vorzugsweise ist die zweite Drehgeschwindigkeit der Abtriebswelle höher als die erste Drehgeschwindigkeit der Abtriebswelle. Es ist denkbar, dass die Antriebsstrangeinheit noch weitere, von dem ersten Geschwindigkeitsmodus und dem zweiten Geschwindigkeitsmodus verschiedene Geschwindigkeitsmodi aufweist. Die Antriebsstrangeinheit, insbesondere das Getriebe, ist insbesondere zumindest zu einer Kombination des ersten Drehrichtungsmodus, insbesondere des Motors, mit dem ersten Geschwindigkeitsmodus und/oder mit dem zweiten Geschwindigkeitsmodus vorgesehen. Die Antriebsstrangeinheit, insbesondere das Getriebe, ist insbesondere zumindest zu einer Kombination des zweiten Drehrichtungsmodus, insbesondere des Motors, mit dem ersten Geschwindigkeitsmodus vorgesehen, bevorzugt zu einer Kombination des zweiten Drehrichtungsmodus, insbesondere des Motors, mit dem ersten Geschwindigkeitsmodus und/oder mit dem zweiten Geschwindigkeitsmodus vorgesehen.

Die Schalteinheit ist insbesondere dazu vorgesehen, zwischen den Drehrichtungsmodi und den Geschwindigkeitsmodi zu schalten. Das Betätigungselement der Schalteinheit ist von einem Nutzer der Werkzeugmaschine bzw. der Werkzeugmaschinenvorrichtung insbesondere zu einer Auswahl eines Drehrichtungsmodus und/oder eines Geschwindigkeitsmodus vorgesehen. Vorzugsweise ist das Betätigungselement zu einer Auswahl eines Drehrichtungsmodus und eines Geschwindigkeitsmodus vorgesehen. Alternativ ist vorstellbar, dass das Betätigungselement lediglich zu einer Auswahl eines Drehrichtungsmodus oder eines Geschwindigkeitsmodus vorgesehen ist und dass die Schalteinheit insbesondere zumindest ein weiteres Betätigungselement aufweist, das zu einer Auswahl eines Drehrichtungsmodus oder eines Geschwindigkeitsmodus, insbesondere eines durch das Betätigungselement nicht auswählbaren Modus, vorgesehen ist. Das Betätigungselement ist vorzugsweise als ein Schiebeschalter, insbesondere als ein Rotationsschiebeschalter, oder als ein Drehschalter ausgebildet. Alternativ ist denkbar, dass das Betätigungselement als ein Linearschiebeschalter, als ein Drückerschalter, als ein Kippschalter, als ein Taster oder als ein anderes, einem Fachmann als sinnvoll erscheinendes Betätigungselement ausgebildet ist. Vorzugsweise weist das Betätigungselement eine Mehrzahl von Schaltstellungen auf. Insbesondere weist das Betätigungselement zumindest eine Schaltstellung, die dem ersten Drehrichtungsmodus entspricht, zumindest eine Schaltstellung, die dem zweiten Drehrichtungsmodus entspricht, zumindest eine Schaltstellung, die dem ersten Geschwindigkeitsmodus entspricht und zumindest eine Schaltstellung, die dem zweiten Geschwindigkeitsmodus entspricht, auf. Die Schaltstellung, die dem ersten Drehrichtungsmodus entspricht und die Schaltstellung, die dem ersten Geschwindigkeitsmodus entspricht, können insbesondere durch dieselbe Schaltstellung gebildet sein.

Das Schaltelement ist vorzugsweise dazu vorgesehen, in Abhängigkeit von einer Schaltstellung des Betätigungselements, insbesondere elektronisch, zwischen den Drehrichtungsmodi zu schalten. Alternativ oder zusätzlich ist denkbar, dass das Schaltelement dazu vorgesehen ist, in Abhängigkeit von einer Schaltstellung des Betätigungselements, insbesondere elektronisch, zwischen den Geschwindigkeitsmodi zu schalten. Insbesondere ist das Schaltelement dazu vorgesehen, in der Schaltstellung des Betätigungselements entsprechend dem ersten Drehrichtungsmodus das Getriebe und/oder den Motor, insbesondere elektronisch, in den ersten Drehrichtungsmodus zu schalten. Insbesondere ist das Schaltelement dazu vorgesehen, in der Schaltstellung des Betätigungselements entsprechend dem zweiten Drehrichtungsmodus das Getriebe und/oder den Motor, insbesondere elektronisch, in den zweiten Drehrichtungsmodus zu schalten. Insbesondere ist das Schaltelement zumindest elektronisch, bevorzugt elektronisch und mechanisch, mit einer Elektronikeinheit der Werkzeugmaschinenvorrichtung bzw. der Werkzeugmaschine verbunden. Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise weist die Elektronikeinheit zumindest eine Leiterplatte auf, an der beispielsweise ein Mikroprozessor, ein integrierter Schaltkreis, insbesondere ein anwendungsspezifischer integrierter Schaltkreis, eine logische elektronische Schaltung o. dgl. angeordnet sein kann. Vorzugsweise ist das Schaltelement elektrisch bzw. elektronisch mit der Leiterplatte verbunden. Insbesondere kann das Schaltelement an der Leiterplatte angeordnet, insbesondere fixiert, sein.

Vorzugsweise ist das Schaltelement dazu vorgesehen, eine Schaltstellung des Betätigungselements zu erfassen und insbesondere in Abhängigkeit der erfassten Schaltstellung des Betätigungselements der Elektronikeinheit ein, insbesondere elektronisches, Signal zu einem Schalten des Drehrichtungsmodus bereitzustellen. Vorzugsweise schaltet die Elektronikeinheit in Abhängigkeit von dem Signal des Schaltelements das Getriebe und/oder den Motor in den entsprechenden Drehrichtungsmodus. Vorzugsweise schaltet die Elektronikeinheit den Motor in den entsprechenden Drehrichtungsmodus. Insbesondere passt die Elektronikeinheit in Abhängigkeit von dem Signal des Schaltelements eine elektrische Polung des Motors entsprechend einem gewählten Drehrichtungsmodus an. Alternativ ist denkbar, dass die Werkzeugmaschinenvorrichtung einen, insbesondere mechanischen, Mechanismus aufweist, der das Getriebe, insbesondere mittels des Gangschaltelements, in Abhängigkeit von einer erfassten Schaltstellung des Betätigungselements, insbesondere in Abhängigkeit eines Signals des Schaltelements, in den entsprechenden Drehrichtungsmodus schaltet. Das Schaltelement ist vorzugsweise zu einer mechanischen und/oder berührungslosen Erfassung einer Schaltstellung des Betätigungselements vorgesehen. Das Schaltelement kann insbesondere eine Position des Betätigungselements und/oder eine Position eines mit dem Betätigungselement gekoppelten, insbesondere zumindest teilweise an dem Betätigungselement angeordneten, Aktivierungselements der Schalteinheit zu einer Erfassung der Schaltstellung des Betätigungselements erfassen. Das Schaltelement kann insbesondere als ein Schalter, als ein Sensor oder als ein anderes, einem Fachmann als sinnvoll erscheinendes Schaltelement ausgebildet sein.

Vorzugsweise ist die Schalteinheit dazu vorgesehen, mechanisch, insbesondere in Abhängigkeit von einer Schaltstellung des Betätigungselements, zwischen den Geschwindigkeitsmodi zu schalten. Insbesondere weist die Antriebsstrangeinheit das Gangschaltelement auf, das dazu vorgesehen ist, zwischen den Geschwindigkeitsmodi zu schalten und das insbesondere mit der Schalteinheit wirkverbunden ist. Das Gangschaltelement kann vorzugsweise als ein Zapfen, ein Stift, ein Federbügel o. dgl. ausgebildet sein. Vorzugsweise ist das Gangschaltelement mit dem Getriebe und mit der Schalteinheit, insbesondere mechanisch, gekoppelt. Bevorzugt ist das Gangschaltelement mechanisch mit zumindest einem Schaltrad des Getriebes gekoppelt. Bevorzugt ist das Schaltrad als ein Hohlrad ausgebildet. Insbesondere ist das Gangschaltelement dazu vorgesehen, zu einem Schalten zwischen den Geschwindigkeitsmodi das Schaltrad, insbesondere zumindest im Wesentlichen parallel zu der Abtriebsachse, zu verschieben. Insbesondere sind die Geschwindigkeitsmodi der Antriebsstrangeinheit abhängig von einer Stellung des Schaltrads. Insbesondere schaltet das Schaltrad Bauteile, insbesondere Zahnräder, des Getriebes, insbesondere auf eine einem Fachmann bekannte Art und Weise, in Folge einer Verschiebung des Schaltrads. Vorzugsweise ist das Gangschaltelement zu einer Verschiebung des Schaltrads beweglich, insbesondere zumindest im Wesentlichen parallel zu der Abtriebsachse beweglich, an dem Getriebegehäuse gelagert.

Durch die erfindungsgemäße Ausgestaltung der Werkzeugmaschinenvorrichtung kann eine vorteilhaft einfache und komfortable Bedienung einer Werkzeugmaschine, insbesondere hinsichtlich einer Einstellung von Drehrichtungsmodi und Geschwindigkeitsmodi, ermöglicht werden. Vorteilhaft kann aufgrund eines zumindest im Wesentlichen automatischen, insbesondere elektronischen, Schaltens zwischen den Drehrichtungsmodi auf eine Mehrzahl von, insbesondere komplexen, mechanischen Bauteilen zu einem Schalten zwischen den Drehrichtungsmodi verzichtet werden. Es kann eine vorteilhaft kompakt ausgebildete, kostengünstige und zuverlässige Werkzeugmaschinenvorrichtung bereitgestellt werden, die eine vorteilhaft kompakte, kostengünstige und zuverlässige Werkzeugmaschine ermöglicht.

Weiterhin wird vorgeschlagen, dass die Schalteinheit zumindest ein dem Betätigungselement zugeordnetes Aktivierungselement umfasst, das dazu vorgesehen ist, das Schaltelement, insbesondere zu einer Erfassung einer Schaltstellung des Betätigungselements, zu betätigen. Insbesondere ist das Aktivierungselement zumindest wirkverbunden mit dem Betätigungselement. Vorzugsweise ist das Aktivierungselement, insbesondere zumindest kraft- und/oder formschlüssig, an dem Betätigungselement fixiert. Alternativ ist denkbar, dass das Aktivierungselement stoffschlüssig mit dem Betätigungselement verbunden, insbesondere einteilig mit dem Betätigungselement ausgebildet, ist. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Das Aktivierungselement kann vorzugsweise zumindest teilweise in das Betätigungselement integriert sein. Insbesondere kann das Betätigungselement zumindest teilweise als Aktivierungselement ausgebildet sein bzw. eine Funktion eines Aktivierungselements erfüllen. Das Aktivierungselement kann auch separat zu dem Betätigungselement ausgebildet sein. Insbesondere kann die Schalteinheit eine Mehrzahl von Aktivierungselementen aufweisen, von denen insbesondere zumindest ein Aktivierungselement separat von dem Betätigungselement ausgebildet ist. Insbesondere kann das Aktivierungselement mehrteilig ausgebildet sein, wobei insbesondere zumindest ein Teil des Aktivierungselements an dem Betätigungselement fixiert ist und zumindest ein weiterer Teil des Aktivierungselements separat zu dem Betätigungselement ausgebildet ist. Das Aktivierungselement ist insbesondere zu einer berührungslosen Betätigung des, insbesondere als Sensor ausgebildeten, und/oder zu einer mechanischen Betätigung des, insbesondere als mechanischer Schalter oder Signalschalter ausgebildeten, Schaltelements vorgesehen. Vorzugsweise schaltet das Aktivierungselement das Schaltelement in unterschiedlichen Positionen des Aktivierungselements unterschiedlich. Eine Position des Aktivierungselements ist vorzugsweise abhängig von, insbesondere proportional zu, einer Schaltstellung des Betätigungselements. Vorzugsweise entsprechen unterschiedliche Positionen des Aktivierungselements unterschiedlichen Drehrichtungsmodi. Das Aktivierungselement kann insbesondere als eine Schaltstange, als ein Magnet, als eine Temperaturquelle, als eine Lichtquelle oder als ein anderes, einem Fachmann als sinnvoll erscheinendes Aktivierungselement ausgebildet sein. Vorteilhaft kann eine automatische Betätigung des Schaltelements in Abhängigkeit von einer Schaltstellung des Betätigungselements ermöglicht werden.

Des Weiteren wird vorgeschlagen, dass das Aktivierungselement zu einer mechanischen Betätigung des Schaltelements vorgesehen ist. Vorzugsweise ist das Aktivierungselement zu einer mechanischen Betätigung des Schaltelements vorgesehen, das als ein mechanischer Schalter oder ein Signalschalter ausgebildet ist. Das Aktivierungselement kann zu einer mechanischen Betätigung des Schaltelements insbesondere als eine Schaltstange, als ein Schaltknopf, als ein Aktivierungsfortsatz, insbesondere des Betätigungselements, oder als ein anderes, einem Fachmann als sinnvoll erscheinendes Aktivierungselement ausgebildet sein. Vorzugsweise ist das Aktivierungselement dazu vorgesehen, das Schaltelement zu einer mechanischen Betätigung zu drücken, zu verschieben, zu verdrehen o. dgl. Vorzugsweise ist das Aktivierungselement auf einer Seite des Betätigungselements angeordnet bzw. bildet die Seite zumindest teilweise aus, die dem Schaltelement in zumindest einer Schaltstellung des Betätigungselements zugewandt ist. Vorzugsweise entsprechen eine dem Schaltelement zugewandte Position des Aktivierungselements und eine dem Schaltelement abgewandte Position des Aktivierungselements zwei unterschiedlichen Schaltstellungen des Betätigungselements und zwei unterschiedlichen Drehrichtungsmodi, insbesondere dem ersten Drehrichtungsmodus bzw. dem zweiten Drehrichtungsmodus. Es kann eine vorteilhaft energieeffiziente Möglichkeit einer Betätigung des Schaltelements bereitgestellt werden.

Zudem wird vorgeschlagen, dass das Aktivierungselement zu einer berührungslosen, insbesondere magnetischen, Betätigung des Schaltelements vorgesehen ist. Bevorzugt ist das Aktivierungselement zu einer berührungslosen, insbesondere magnetischen, Betätigung des Schaltelements vorgesehen, das als ein Sensor, insbesondere als ein Hall-Sensor, ausgebildet ist. Vorzugsweise ist das Aktivierungselement zu einer magnetischen Betätigung des Schaltelements zumindest teilweise magnetisch, insbesondere als ein Magnet, ausgebildet. Vorzugsweise ist das Aktivierungselement als ein Permanentmagnet, beispielsweise aus Eisen, Kobalt, Nickel o. dgl., oder als ein Elektromagnet, beispielsweise in Form einer Spule, ausgebildet. Insbesondere ist vorstellbar, dass das Betätigungselement zu einer Ausbildung des Aktivierungselements zumindest teilweise magnetisch ausgebildet ist. Alternativ ist denkbar, dass das Aktivierungselement zu einer von einer magnetischen Betätigung des Schaltelements verschiedenen berührungslosen Betätigung des Schaltelements vorgesehen ist, beispielsweise zu einer optischen, einer thermischen, einer kapazitiven oder einer anderen, einem Fachmann als sinnvoll erscheinenden Betätigung des Schaltelements. Zu einer optischen Betätigung des Schaltelements kann das Aktivierungselement insbesondere als eine Lichtquelle, als ein Lichtabsorber o. dgl. ausgebildet sein. Zu einer thermischen Betätigung des Schaltelements kann das Aktivierungselement insbesondere als eine Wärmequelle, als eine Kältequelle o. dgl. ausgebildet sein. Zu einer kapazitiven Betätigung des Schaltelements kann das Aktivierungselement insbesondere als eine Elektrode, als ein Dielektrikum o. dgl. ausgebildet sein. Vorzugsweise ist das Aktivierungselement auf einer Seite des Betätigungselements angeordnet bzw. bildet die Seite zumindest teilweise aus, die dem Schaltelement in zumindest einer Schaltstellung des Betätigungselements zugewandt ist. Vorzugsweise entsprechen eine dem Schaltelement zugewandte Position des Aktivierungselements und eine dem Schaltelement abgewandte Position des Aktivierungselements zwei unterschiedlichen Schaltstellungen des Betätigungselements und zwei unterschiedlichen Drehrichtungsmodi, insbesondere dem ersten Drehrichtungsmodus bzw. dem zweiten Drehrichtungsmodus. Es kann eine vorteilhaft zuverlässige Betätigung des Schaltelements ermöglicht werden.

Des Weiteren wird vorgeschlagen, dass das Schaltelement als ein Sensor, insbesondere als ein Hall-Sensor, ausgebildet ist. Das Schaltelement ist insbesondere als ein Magnetsensor, bevorzugt als ein Hall-Sensor, ausgebildet. Alternativ ist denkbar, dass das Schaltelement als ein optischer Sensor, beispielsweise als eine Lichtschranke, als ein Helligkeitssensor, als ein Laserscanner o. dgl., als ein thermischer Sensor, insbesondere als ein Temperatursensor, als ein kapazitiver Sensor oder als ein anderer, einem Fachmann als sinnvoll erscheinender Sensor ausgebildet ist. Insbesondere ist das Schaltelement als ein berührungsloser Sensor ausgebildet. Vorzugsweise ist das Schaltelement durch eine Akkueinheit der Werkzeugmaschine, insbesondere über die Elektronikeinheit, mit elektrischer Energie versorgbar und/oder betreibbar. Vorzugsweise erfasst das Schaltelement eine magnetische Feldstärke, deren Größe insbesondere abhängig von einer Schaltstellung des Betätigungselements ist. Vorzugsweise entsprechen unterschiedliche erfasste magnetische Feldstärken unterschiedlichen Schaltstellungen des Betätigungselements. Die magnetische Feldstärke kann insbesondere von einem zumindest teilweise magnetisch ausgebildeten Betätigungselement und/oder einem magnetischen Aktivierungselement der Schalteinheit ausgehen. Vorzugsweise stellt das Schaltelement der Elektronikeinheit in Abhängigkeit von der erfassten magnetischen Feldstärke ein elektrisches bzw. elektronisches Signal bereit, in Abhängigkeit von dem die Elektronikeinheit das Getriebe und/oder den Motor in einen entsprechenden Drehrichtungsmodus schaltet. Vorteilhaft kann ein berührungsloses, insbesondere zumindest im Wesentlichen abnutzungsfreies, Schalten zwischen den Drehrichtungsmodi ermöglicht werden.

Ferner wird vorgeschlagen, dass das Schaltelement als ein mechanischer Schalter oder ein Signalschalter ausgebildet ist. Insbesondere ist das Schaltelement alternativ oder zusätzlich zu einer Ausbildung als ein Sensor, insbesondere als ein Hall-Sensor, als ein mechanischer Schalter oder ein Signalschalter ausgebildet. Insbesondere ist denkbar, dass die Schalteinheit zumindest ein als ein Sensor, insbesondere als ein Hall-Sensor, ausgebildetes Schaltelement und ein als ein mechanischer Schalter oder ein Signalschalter ausgebildetes Schaltelement, insbesondere zu einem redundanten Schalten zwischen den Drehrichtungsmodi, aufweist. Das Schaltelement kann insbesondere als ein Drückerschalter, als ein Schiebeschalter, als ein Wippschalter, als ein Drehschalter, als ein Kippschalter oder als ein anderer, einem Fachmann als sinnvoll erscheinender mechanischer Schalter oder Signalschalter ausgebildet sein. Vorzugsweise ist das Schaltelement zu einem Schalten zwischen den Drehrichtungsmodi durch das Betätigungselement und/oder ein Aktivierungselement der Schalteinheit mechanisch betätigbar. Insbesondere kann das Schaltelement eine Mehrzahl von, insbesondere mit den Schaltstellungen des Betätigungselements korrespondierenden, Schaltstufen aufweisen. Vorzugsweise ist das Schaltelement in unterschiedlichen Schaltstellungen des Betätigungselements unterschiedlich betätigbar, insbesondere in unterschiedliche Schaltstufen schaltbar. Insbesondere kann das Aktivierungselement das Schaltelement entsprechend unterschiedlichen Schaltstellungen des Betätigungselements unterschiedlich betätigen, insbesondere in unterschiedliche Schaltstufen schalten. Vorzugsweise stellt das Schaltelement der Elektronikeinheit in Abhängigkeit von der Schaltstufe ein elektrisches bzw. elektronisches Signal bereit, in Abhängigkeit von dem die Elektronikeinheit das Getriebe und/oder den Motor in einen entsprechenden Drehrichtungsmodus schaltet. Vorteilhaft kann ein elektronisches Schalten der Drehrichtungsmodi über eine mechanische Kopplung erreicht werden.

Weiterhin wird vorgeschlagen, dass die Schalteinheit zumindest ein mit dem Betätigungselement wirkverbundenes Verschiebungselement aufweist, das dazu vorgesehen ist, in Abhängigkeit von einer Schaltstellung des Betätigungselements zwischen den Geschwindigkeitsmodi zu schalten. Vorzugsweise ist das Verschiebungselement mechanisch, insbesondere unmittelbar oder mittelbar, mit der Antriebsstrangeinheit, insbesondere mit dem Gangschaltelement, gekoppelt. Insbesondere ist das Verschiebungselement beweglich, insbesondere zumindest im Wesentlichen parallel zu der Abtriebsachse beweglich, an der Antriebsstrangeinheit, insbesondere an dem Getriebegehäuse, gelagert. Bevorzugt kann das Verschiebungselement zumindest im Wesentlichen ringförmig um das Getriebegehäuse angeordnet sein, insbesondere als ein Verschiebungsring ausgebildet sein. Vorzugsweise ist das Verschiebungselement auf bzw. an einer Feder gelagert. Vorzugsweise übt die Feder eine zumindest im Wesentlichen parallel zu der Abtriebsachse gerichtete Kraft auf das Verschiebungselement aus. Vorzugsweise ist das Verschiebungselement mechanisch mit dem Betätigungselement gekoppelt und durch das Betätigungselement entgegen der Kraft verschiebbar. Vorzugsweise kann das Aktivierungselement zumindest teilweise an dem Verschiebungselement angeordnet sein und insbesondere zu einer mechanischen Verbindung zwischen dem Betätigungselement und dem Verschiebungselement vorgesehen sein. Vorteilhaft kann eine Einstellung der Geschwindigkeitsmodi erreicht werden.

Zudem wird vorgeschlagen, dass das Verschiebungselement dazu vorgesehen ist, das mit dem Verschiebungselement wirkverbundene Gangschaltelement zu einem Schalten zwischen den Geschwindigkeitsmodi, insbesondere entlang einer Abtriebsachse der Antriebsstrangeinheit, zu betätigen. Vorzugsweise ist das Gangschaltelement kraft- und/oder formschlüssig mit dem Verschiebungselement verbunden, insbesondere an dem Verschiebungselement fixiert. Alternativ oder zusätzlich ist denkbar, dass das Gangschaltelement stoffschlüssig mit dem Verschiebungselement verbunden, insbesondere einteilig mit dem Verschiebungselement ausgebildet, ist. Insbesondere stellt das Gangschaltelement eine, insbesondere mechanische, Wirkverbindung zwischen dem Verschiebungselement und dem Getriebe, insbesondere dem Schaltrad des Getriebes, her. Insbesondere betätigt, insbesondere verschiebt, das Verschiebungselement das Gangschaltelement in Folge einer Betätigung des Verschiebungselements. Insbesondere betätigt, insbesondere verschiebt, das Gangschaltelement das Schaltrad in Folge einer Betätigung des Gangschaltelements durch das Verschiebungselement. Vorzugsweise ist das Betätigungselement über das Verschiebungselement und das Gangschaltelement, insbesondere mechanisch, wirkverbunden mit dem Getriebe, insbesondere mit dem Schaltrad. Insbesondere wird eine Betätigung des Betätigungselements zu einer Auswahl eines Geschwindigkeitsmodus über das Verschiebungselement und das Gangschaltelement an das Getriebe, insbesondere das Schaltrad, übertragen. Vorzugsweise verschiebt das Verschiebungselement das Gangschaltelement zumindest im Wesentlichen parallel zu der Abtriebsachse und das Gangschaltelement insbesondere das Schaltrad zumindest im Wesentlichen parallel zu der Abtriebsachse. Vorteilhaft kann über eine Wirkverbindung des Verschiebungselements mit dem Gangschaltelement eine Wirkverbindung zwischen dem Betätigungselement und dem Getriebe realisiert werden.

Des Weiteren wird vorgeschlagen, dass das Betätigungselement und/oder das Verschiebungselement zu einer Betätigung des Verschiebungselements zumindest abschnittsweise rampenartig ausgebildet sind/ist. Vorzugsweise ist die zumindest abschnittsweise rampenartige Ausbildung des Betätigungselements und/oder des Verschiebungselements dazu vorgesehen, eine Rotationsbewegung des Betätigungselements in eine Translationsbewegung des Verschiebungselements, insbesondere zumindest im Wesentlichen parallel zu der Abtriebsachse, zu wandeln. Insbesondere kann das Verschiebungselement entlang zumindest eines rampenartigen Abschnitts des Verschiebungselements und/oder des Betätigungselements zumindest im Wesentlichen senkrecht zu einer Rotationsrichtung des Betätigungselements gleiten. Insbesondere wird das Verschiebungselement durch den rampenartigen Abschnitt entgegen einer durch die Feder, auf bzw. an der das Verschiebungselement gelagert ist, auf das Verschiebungselement ausgeübten Kraft verschoben. Insbesondere können/kann das Betätigungselement und/oder das Verschiebungselement zumindest einen rampenartigen Fortsatz und/oder zumindest eine rampenartige Aussparung aufweisen. Bevorzugt ist denkbar, dass das Verschiebungselement zumindest eine rampenartige Aussparung, insbesondere auf einer dem Betätigungselement zugewandten Seite des Verschiebungselements, aufweist und dass das Betätigungselement zumindest einen rampenartigen Fortsatz, insbesondere auf einer dem Verschiebungselement zugewandten Seite des Betätigungselements, aufweist. Vorzugsweise greift der rampenartige Fortsatz in zumindest einer Schaltstellung des Betätigungselements, insbesondere zumindest im Wesentlichen formgenau, in die rampenartige Aussparung ein. Insbesondere ist der rampenartige Fortsatz in zumindest einer weiteren Schaltstellung des Betätigungselements zumindest teilweise, bevorzugt vollständig, aus der rampenartigen Aussparung ausgeschoben. Vorteilhaft kann eine effiziente Kraftübertragung zwischen dem Betätigungselement und dem Verschiebungselement, insbesondere zu einer Verschiebung des Verschiebungselements, erreicht werden.

Ferner wird vorgeschlagen, dass das Verschiebungselement entlang einer Abtriebsachse der Antriebsstrangeinheit beweglich an der Antriebsstrangeinheit gelagert, insbesondere federgelagert, ist. Insbesondere ist das Verschiebungselement an dem Getriebegehäuse beweglich gelagert, insbesondere federgelagert. Vorzugsweise ist das Verschiebungselement zumindest im Wesentlichen ringförmig um die Antriebsstrangeinheit, insbesondere um das Getriebegehäuse, angeordnet. Vorzugsweise ist das Verschiebungselement auf bzw. an der Feder, insbesondere einer Druckfeder, der Antriebsstrangeinheit gelagert. Insbesondere kann die Feder schraubenfederartig um das Getriebegehäuse angeordnet sein. Vorzugsweise ist die Feder zwischen dem Getriebegehäuse und dem Verschiebungselement an dem Getriebegehäuse angeordnet. Insbesondere ist das Verschiebungselement durch die Feder entlang der Abtriebsachse beweglich an dem Getriebegehäuse gelagert. Vorzugsweise übt die Feder eine Kraft zumindest im Wesentlichen parallel zu der Abtriebsachse auf das Verschiebungselement aus, durch die das Verschiebungselement entlang der Abtriebsachse verschiebbar ist. Vorzugsweise übt das Betätigungselement, insbesondere über die zumindest abschnittsweise rampenartige Ausbildung des Betätigungselements und/oder des Verschiebungselements, eine entgegen der durch die Feder ausgeübten Kraft wirkende Kraft zumindest im Wesentlichen parallel zu der Abtriebsachse auf das Verschiebungselement aus, durch die das Verschiebungselement entlang der Abtriebsachse verschiebbar ist. Vorzugsweise verschiebt das Verschiebungselement durch eine Bewegung entlang der Abtriebsachse über das Gangschaltelement das Schaltrad und schaltet insbesondere zwischen den Geschwindigkeitsmodi. Vorteilhaft kann eine funktionelle und kompakt ausgebildete Schalteinheit bereitgestellt werden.

Weiterhin wird vorgeschlagen, dass das Verschiebungselement zumindest eine Schaltkulisse zu einer Betätigung des Gangschaltelements, insbesondere entlang einer Abtriebsachse der Antriebsstrangeinheit, aufweist. Vorzugsweise ist die Schaltkulisse als eine, insbesondere zumindest im Wesentlichen schlitzartige, Ausnehmung in dem Verschiebungselement ausgebildet. Die Schaltkulisse erstreckt sich zumindest entlang eines Teilumfangs des, insbesondere als Verschiebungsring ausgebildeten, Verschiebungselements. Vorzugsweise umfasst die Schaltkulisse zumindest einen ersten Abschnitt, der sich zumindest im Wesentlichen senkrecht zu der Abtriebsachse erstreckt. Vorzugsweise umfasst die Schaltkulisse zumindest einen zweiten Abschnitt, der entlang der Abtriebsachse versetzt zu dem ersten Abschnitt angeordnet ist. Insbesondere ist das Verschiebungselement, das die Schaltkulisse aufweist, entlang der Abtriebsachse zumindest im Wesentlichen unbeweglich an der Antriebsstrangeinheit, insbesondere an dem Getriebegehäuse, gelagert. Insbesondere ist das Verschiebungselement, das die Schaltkulisse aufweist, um die Abtriebsachse rotierbar an der Antriebsstrangeinheit, insbesondere an dem Getriebegehäuse gelagert. Vorzugsweise ist das Gangschaltelement zumindest abschnittsweise in der Schaltkulisse angeordnet. Insbesondere erstreckt sich das Gangschaltelement zumindest abschnittsweise zumindest im Wesentlichen senkrecht zu der Abtriebsachse in der Schaltkulisse. Insbesondere weist die als Ausnehmung in dem Verschiebungselement ausgebildete Schaltkulisse eine Breite auf, die zumindest im Wesentlichen einem Durchmesser des Gangschaltelements entspricht. Die Schaltkulisse ist dazu vorgesehen, das Gangschaltelement, insbesondere entlang der Abtriebsachse, zu verschieben, insbesondere in Folge einer Rotationsbewegung des Verschiebungselements um die Abtriebsachse. Insbesondere gleitet das Gangschaltelement in Folge einer Rotationsbewegung des Verschiebungselements innerhalb und entlang der Schaltkulisse, insbesondere einer Formgebung der Schaltkulisse folgend. Vorzugsweise wird das Gangschaltelement durch eine Drehung des Verschiebungselements zumindest zwischen dem ersten Abschnitt der Schaltkulisse und dem zweiten Abschnitt der Schaltkulisse verschoben. Insbesondere entspricht eine Verschiebung des Gangschaltelements zwischen dem ersten Abschnitt der Schaltkulisse und dem zweiten Abschnitt der Schaltkulisse einer Verschiebung des Gangschaltelements entlang der Abtriebsachse. Vorzugsweise rotiert das Verschiebungselement in Folge einer Rotation des Betätigungselements um die Abtriebsachse um die Abtriebsachse. Insbesondere ist das Verschiebungselement, insbesondere über das Aktivierungselement, mechanisch mit dem Betätigungselement verbunden. Vorteilhaft kann durch eine Rotationsbewegung des Verschiebungselements eine Betätigung, insbesondere eine Verschiebung, des Gangschaltelements entlang der Abtriebsachse erreicht werden.

Ferner wird vorgeschlagen, dass das Betätigungselement zumindest im Wesentlichen ringförmig um die Antriebsstrangeinheit angeordnet ist. Vorzugsweise ist das Betätigungselement zumindest im Wesentlichen ringförmig um das Getriebegehäuse angeordnet. Insbesondere ist das Betätigungselement als ein Betätigungsring, insbesondere als ein Drehring, ausgebildet. Vorzugsweise ist das Betätigungselement um die Abtriebsachse drehbar an, insbesondere um, das Getriebegehäuse gelagert. Vorzugsweise ist das Verschiebungselement als ein Verschiebungsring ausgebildet. Vorzugsweise ist das Verschiebungselement zumindest im Wesentlichen ringförmig um die Antriebsstrangeinheit, insbesondere das Getriebegehäuse, angeordnet. Vorzugsweise ist das Verschiebungselement zumindest im Wesentlichen parallel zu der Abtriebsachse verschiebbar an, insbesondere um, das Getriebegehäuse, insbesondere an der Feder der Antriebsstrangeinheit gelagert. Vorzugsweise liegen das Betätigungselement und das Verschiebungselement in zumindest einer Schaltstellung des Betätigungselements entlang der Abtriebsachse betrachtet, insbesondere zumindest im Wesentlichen formgenau, aneinander an. Vorzugsweise sind das Betätigungselement und das Verschiebungselement in zumindest einer Schaltstellung des Betätigungselements entlang der Abtriebsachse betrachtet zumindest abschnittsweise voneinander beabstandet an dem Getriebegehäuse angeordnet. Alternativ ist denkbar, dass das Betätigungselement und das Verschiebungselement unabhängig von einer Schaltstellung des Betätigungselements in festen Positionen relativ zueinander, insbesondere durch das Aktivierungselement miteinander verbunden, an dem Getriebegehäuse angeordnet sind. Vorzugsweise ist das Betätigungselement in einem in einer Werkzeugmaschine montierten Zustand der Schalteinheit zumindest im Wesentlichen vollständig innerhalb einer Gehäuseeinheit der Werkzeugmaschine angeordnet. Vorzugsweise umfasst das Betätigungselement zumindest einen Betätigungsfortsatz zu einer Betätigung des Betätigungselements. Insbesondere ragt der Betätigungsfortsatz in einem montierten Zustand der Schalteinheit zumindest abschnittsweise aus der Gehäuseeinheit der Werkzeugmaschine, insbesondere durch eine Betätigungsausnehmung der Gehäuseeinheit, hinaus. Es kann ein Betätigungselement bereitgestellt werden, das eine vorteilhaft kompakte Ausbildung der Werkzeugmaschinenvorrichtung bzw. einer Werkzeugmaschine ermöglicht.

Weiterhin wird vorgeschlagen, dass die Schalteinheit zumindest eine Ausgabeeinheit zu einer optischen, akustischen und/oder haptischen Ausgabe in Abhängigkeit von einer Betätigung und/oder Schaltstellung des Betätigungselements aufweist. Vorzugsweise ist die Ausgabeeinheit zumindest teilweise an dem Betätigungselement angeordnet. Die Ausgabeeinheit kann zu einer optischen Ausgabe zumindest ein Anzeigeelement aufweisen. Das Anzeigeelement kann als ein statisches Anzeigeelement oder als ein dynamisches Anzeigeelement ausgebildet sein. Ein statisches Anzeigeelement kann insbesondere zumindest einen Drehrichtungsmodus und/oder Geschwindigkeitsmodus repräsentieren. Das statische Anzeigeelement kann insbesondere als ein Symbol ausgebildet sein, beispielsweise als ein Pfeil, ein Punkt, ein schematischer Schraubendreher, eine schematische Bohrmaschine o. dgl. Beispielsweise kann ein in Richtung des Einsatzwerkzeugs zeigender Pfeil den ersten Drehrichtungsmodus und/oder den ersten Geschwindigkeitsmodus repräsentieren. Beispielsweise kann ein von dem Einsatzwerkzeug wegzeigender Pfeil den zweiten Drehrichtungsmodus und/oder den ersten Geschwindigkeitsmodus repräsentieren. Beispielsweise kann ein Doppelpfeil den zweiten Geschwindigkeitsmodus repräsentieren. Beispielsweise kann ein schematischer Schraubendreher den ersten Geschwindigkeitsmodus repräsentieren. Beispielsweise kann eine schematische Bohrmaschine den zweiten Geschwindigkeitsmodus repräsentieren. Vorzugsweise weist die Ausgabeeinheit eine Mehrzahl von statischen Anzeigeelementen auf, die unterschiedliche Drehrichtungsmodi und/oder Geschwindigkeitsmodi repräsentieren und die insbesondere entsprechend unterschiedlichen Schaltstellungen des Betätigungselements an dem Betätigungselement angeordnet, insbesondere auf das Betätigungselement aufgedruckt sind. Das dynamische Anzeigeelement kann insbesondere als eine LED, als ein Bildschirm o. dgl. ausgebildet sein. Vorzugsweise ist das dynamische Anzeigeelement dazu vorgesehen, in Abhängigkeit von unterschiedlichen Schaltstellungen des Betätigungselements unterschiedliche Symbole, Farben, Blinkgeschwindigkeiten o. dgl. darzustellen.

Die Ausgabeeinheit kann zu einer akustischen Ausgabe vorzugsweise zumindest einen Lautsprecher aufweisen. Vorzugsweise ist der Lautsprecher dazu vorgesehen, in Abhängigkeit von unterschiedlichen Schaltstellungen des Betätigungselements unterschiedliche Töne, Tonfolgen, Tonanzahlen, Ansagen o. dgl. auszugeben. Die Ausgabeeinheit kann zu einer haptischen Ausgabe zumindest einen Vibrationsmotor, ein Rastfederelement o. dgl. aufweisen. Der Vibrationsmotor ist vorzugsweise dazu vorgesehen, in Abhängigkeit von unterschiedlichen Schaltstellungen des Betätigungselements unterschiedliche Vibrationen, Vibrationsfolgen, Vibrationsdauern o. dgl. auszugeben. Das Rastfederelement kann insbesondere zumindest im Wesentlichen radial zu der Abtriebsachse angeordnet sein. Vorzugsweise ist das Rastfederelement dazu vorgesehen, eine, insbesondere zumindest im Wesentlichen radial von der Abtriebsachse weggerichtete, Kraft auf das Betätigungselement auszuüben. Vorzugsweise weist das Betätigungselement zumindest eine Rastausnehmung auf, die in zumindest einer Schaltstellung des Betätigungselements mit dem Rastfederelement, insbesondere lösbar, verrastbar ist. Insbesondere kann das Betätigungselement eine Mehrzahl von Rastausnehmungen aufweisen, wobei jeweils eine Rastausnehmung jeweils eine Schaltstellung des Betätigungselements repräsentiert. Vorzugsweise ist eine Verrastung des Rastfederelements mit einer Rastausnehmung, insbesondere bei einer Betätigung des Betätigungselements, haptisch spürbar. Vorteilhaft kann einem Nutzer eine Schaltstellung und/oder Betätigung des Betätigungselements übermittelt werden.

Zudem wird vorgeschlagen, dass die Schalteinheit zu einer Auswahl der Drehrichtungsmodi und der Geschwindigkeitsmodi ein einzelnes Betätigungselement aufweist. Vorzugsweise ist das einzelne Betätigungselement zumindest im Wesentlichen analog zu dem vorhergehend beschriebenen Betätigungselement ausgebildet. Insbesondere entsprechen unterschiedliche Schaltstellungen des einzelnen Betätigungselements unterschiedlichen Drehrichtungsmodi und gleichzeitig unterschiedlichen Geschwindigkeitsmodi der Antriebsstrangeinheit. Insbesondere kann eine erste Schaltstellung des einzelnen Betätigungselements dem ersten Drehrichtungsmodus, insbesondere des Motors, und dem ersten Geschwindigkeitsmodus, insbesondere des Getriebes, entsprechen. Insbesondere kann eine zweite Schaltstellung des einzelnen Betätigungselements dem ersten Drehrichtungsmodus, insbesondere des Motors, und dem zweiten Geschwindigkeitsmodus, insbesondere des Getriebes, entsprechen. Insbesondere kann eine dritte Schaltstellung des einzelnen Betätigungselements dem zweiten Drehrichtungsmodus, insbesondere des Motors, und dem ersten Geschwindigkeitsmodus, insbesondere des Getriebes, entsprechen. Vorzugsweise ist das Schaltelement dazu vorgesehen, in Abhängigkeit von einer Schaltstellung des einzelnen Betätigungselements zumindest im Wesentlichen automatisch, insbesondere elektronisch, zwischen den Drehrichtungsmodi zu schalten. Vorzugsweise ist das Verschiebungselement dazu vorgesehen, in Abhängigkeit von einer Schaltstellung des einzelnen Betätigungselements mechanisch zwischen den Geschwindigkeitsmodi zu schalten. Alternativ ist denkbar, dass das Schaltelement dazu vorgesehen ist, in Abhängigkeit von einer Schaltstellung des einzelnen Betätigungselements zumindest im Wesentlichen automatisch, insbesondere elektronisch, zwischen den Drehrichtungsmodi und den Geschwindigkeitsmodi zu schalten. Vorteilhaft kann auf ein zusätzliches Betätigungselement zu einer Auswahl der Geschwindigkeitsmodi oder der Drehrichtungsmodi verzichtet werden. Es kann eine vorteilhaft kostengünstige und kompakt ausgebildete Werkzeugmaschinenvorrichtung bereitgestellt werden, die eine vorteilhaft kostengünstige, kompakt ausgebildete und komfortabel bedienbare Werkzeugmaschine ermöglicht.

Des Weiteren geht die Erfindung aus von einer Werkzeugmaschine, insbesondere von einer Handwerkzeugmaschine, mit zumindest einer erfindungsgemäßen Werkzeugmaschinenvorrichtung. Die Werkzeugmaschine ist vorzugsweise als ein Elektrohandwerkzeug, insbesondere als ein kabelloses Elektrohandwerkzeug, ausgebildet. Bevorzugt ist die Werkzeugmaschine als ein Elektroschrauber, insbesondere als ein Akkuelektroschrauber, ausgebildet. Alternativ ist denkbar, dass die Werkzeugmaschine als eine Bohrmaschine, als ein Bohrhammer oder als eine andere, einem Fachmann als sinnvoll erscheinende Werkzeugmaschine ausgebildet ist. Vorzugsweise umfasst die Werkzeugmaschine zumindest eine Gehäuseeinheit, in der die Werkzeugmaschinenvorrichtung zumindest teilweise angeordnet ist. Insbesondere weist die Gehäuseeinheit zumindest ein erstes Gehäuseschalenelement und zumindest ein zweites Gehäuseschalenelement auf, die vorzugsweise über die Antriebsstrangeinheit miteinander verbunden, insbesondere aneinander fixiert, sind. Die Werkzeugmaschine kann vorzugsweise weitere, zu einem Betrieb der Werkzeugmaschine notwendige Bauteile, wie beispielsweise eine Akkueinheit, eine Werkzeugaufnahme, ein Einsatzwerkzeug o. dgl., umfassen. Insbesondere weist die Werkzeugmaschine zumindest eine Schaltereinheit auf, die zu einer Aktivierung und/oder Deaktivierung des Motors der Werkzeugmaschine vorgesehen ist. Alternativ oder zusätzlich ist denkbar, dass das Schaltelement der Schalteinheit dazu vorgesehen ist, in Abhängigkeit von einer Schaltstellung des Betätigungselements den Motor automatisch, insbesondere elektronisch, zu aktivieren und/oder zu deaktivieren. Insbesondere kann das Betätigungselement eine neutrale Schaltstellung aufweisen, in der das Schaltelement den Motor deaktiviert. Insbesondere kann das Schaltelement den Motor in einer Schaltstellung des Betätigungselements, die dem ersten Geschwindigkeitsmodus, dem zweiten Geschwindigkeitsmodus oder zumindest einem weiteren Geschwindigkeitsmodus entspricht, aktivieren. Es kann eine vorteilhaft kompakte, kostengünstige und zuverlässige Werkzeugmaschine bereitgestellt werden.

Die erfindungsgemäße Werkzeugmaschinenvorrichtung und/oder die erfindungsgemäße Werkzeugmaschine sollen/soll hierbei nicht auf die oben beschriebene Anwendung und Ausführungsform beschränkt sein. Insbesondere können/kann die erfindungsgemäße Werkzeugmaschinenvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer erfindungsgemäßen Werkzeugmaschine in einer schematischen Darstellung,
- Fig. 2: einen Teil einer erfindungsgemäßen Werkzeugmaschinenvorrichtung in einer schematischen Schnittdarstellung,
- Fig. 3: einen Teil der erfindungsgemäßen Werkzeugmaschinenvorrichtung in einer perspektivischen Darstellung,
- Fig. 4: eine erste Schaltstellung eines Betätigungselements einer Schalteinheit der erfindungsgemäßen Werkzeugmaschinenvorrichtung in einer schematischen Draufsicht,
- Fig. 5: eine zweite Schaltstellung des Betätigungselements der Schalteinheit der erfindungsgemäßen Werkzeugmaschinenvorrichtung in einer schematischen Draufsicht,
- Fig. 6: eine dritte Schaltstellung des Betätigungselements der Schalteinheit der erfindungsgemäßen Werkzeugmaschinenvorrichtung in einer schematischen Draufsicht,
- Fig. 7: einen Teil der erfindungsgemäßen Werkzeugmaschinenvorrichtung in einer schematischen Schnittdarstellung,
- Fig. 8: eine alternative Werkzeugmaschine in einer perspektivischen Darstellung,
- Fig. 9: eine erste Alternative einer Ausgabeeinheit einer Schalteinheit einer alternativen erfindungsgemäßen Werkzeugmaschinenvorrichtung in einer perspektivischen Darstellung,
- Fig. 10: eine zweite Alternative einer Ausgabeeinheit einer Schalteinheit der alternativen erfindungsgemäßen Werkzeugmaschinenvorrichtung in einer schematischen Darstellung,
- Fig. 11: eine dritte Alternative einer Ausgabeeinheit einer Schalteinheit der alternativen erfindungsgemäßen Werkzeugmaschinenvorrichtung in einer perspektivischen Darstellung,
- Fig. 12: die alternative erfindungsgemäße Werkzeugmaschinenvorrichtung in einer schematischen Darstellung,
- Fig. 13: die alternative erfindungsgemäße Werkzeugmaschinenvorrichtung aus Figur 12 in einer perspektivischen Darstellung,
- Fig. 14: einen Teil der alternativen erfindungsgemäßen Werkzeugmaschinenvorrichtung aus Figur 12 in einer perspektivischen Darstellung und
- Fig. 15: eine Frontalansicht der alternativen erfindungsgemäßen Werkzeugmaschinenvorrichtung aus Figur 12 in einer schematischen Darstellung.

### Beschreibung der Ausführungsbeispiele

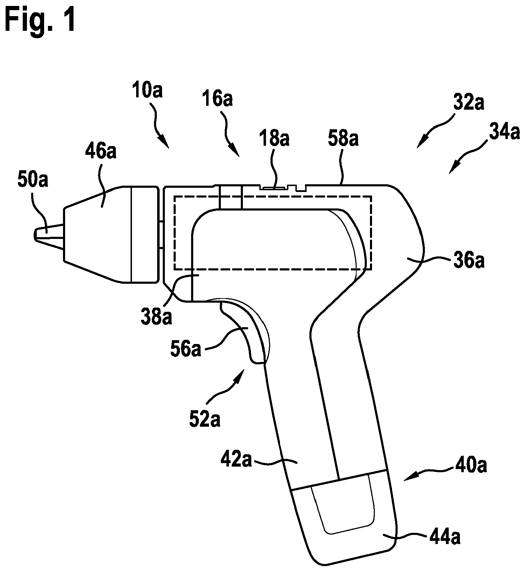

Figur 1 zeigt eine Seitenansicht einer erfindungsgemäßen Werkzeugmaschine 32a in einer schematischen Darstellung. Die Werkzeugmaschine 32a ist als ein Elektrohandwerkzeug ausgebildet. Die Werkzeugmaschine 32a ist als ein kabelloses Elektrohandwerkzeug ausgebildet. Die Werkzeugmaschine 32a ist als ein Akkuelektroschrauber ausgebildet. Alternativ ist denkbar, dass die Werkzeugmaschine 32a als eine Bohrmaschine, als ein Bohrhammer o. dgl. ausgebildet ist. Die Werkzeugmaschine 32a umfasst eine Werkzeugmaschinenvorrichtung 10a. Die Werkzeugmaschine 32a umfasst eine Gehäuseeinheit 34a. Die Werkzeugmaschinenvorrichtung 10a ist zumindest teilweise innerhalb der Gehäuseeinheit 34a angeordnet. Die Werkzeugmaschinenvorrichtung 10a ist gestrichelt angedeutet. Die Gehäuseeinheit 34a weist ein erstes Gehäuseschalenelement 36a und ein zweites Gehäuseschalenelement 38a auf. Das erste Gehäuseschalenelement 36a und das zweite Gehäuseschalenelement 38a sind über eine Antriebsstrangeinheit 12a der Werkzeugmaschinenvorrichtung 10a miteinander verbunden, insbesondere aneinander fixiert. Die Antriebsstrangeinheit 12a ist in Figur 1 nicht weiter dargestellt. Die Werkzeugmaschine 32a umfasst weitere, zu einem Betrieb der Werkzeugmaschine 32a notwendige Bauteile. Die Werkzeugmaschine 32a umfasst eine Akkueinheit 40a. Die Akkueinheit 40a ist zu einer Energieversorgung zumindest der Werkzeugmaschinenvorrichtung 10a vorgesehen. Die Akkueinheit 40a ist als ein Akkumulator ausgebildet. Alternativ ist denkbar, dass die Akkueinheit 40a als eine Batterie, als ein Kondensator o. dgl. ausgebildet ist. Die Akkueinheit 40a ist zumindest teilweise in einem Handgriff 42a der Gehäuseeinheit 34a aufgenommen. Der Handgriff 42a wird durch das erste Gehäuseschalenelement 36a und durch das zweite Gehäuseschalenelement 38a ausgebildet. Eine Abdeckungskappe 44a der Akkueinheit 40a ragt aus dem Handgriff 42a heraus und verlängert den Handgriff 42a.

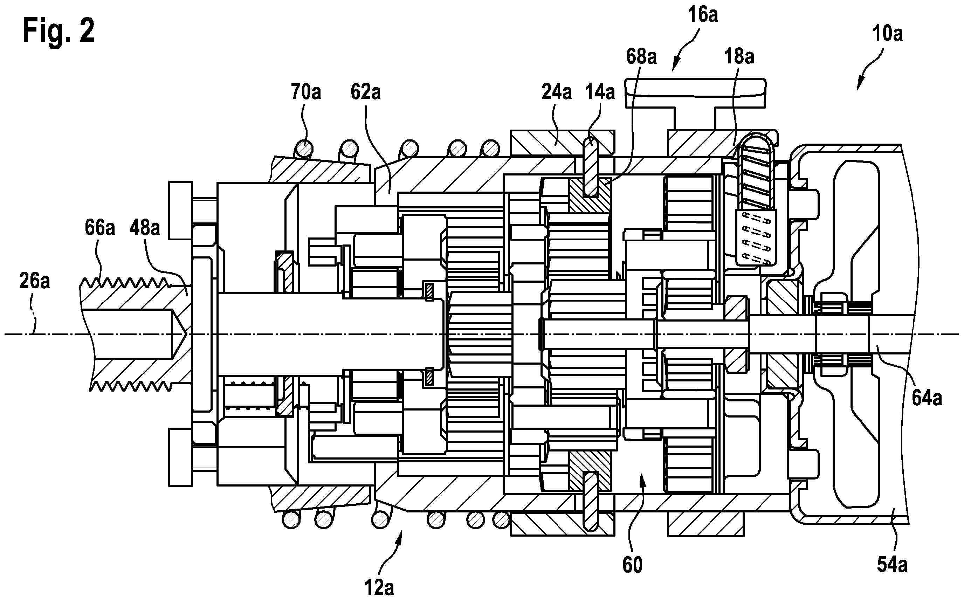

Die Werkzeugmaschine 32a weist eine Werkzeugaufnahme 46a auf. Die Werkzeugaufnahme 46a ist an einer Abtriebswelle 48a der Werkzeugmaschine 32a angeordnet, insbesondere fixiert (vgl. Figur 2). Die Werkzeugaufnahme 46a ist zu einer Aufnahme eines Einsatzwerkzeugs 50a der Werkzeugmaschine 32a vorgesehen. Das Einsatzwerkzeug 50a ist von der Abtriebswelle 48a über die Werkzeugaufnahme 46a rotierend um eine Abtriebsachse 26a der Antriebsstrangeinheit 12a antreibbar. Die Werkzeugaufnahme 46a ist als ein Werkzeugfutter, insbesondere als ein Spannbackenfutter, ausgebildet. Das Einsatzwerkzeug 50a ist in Figur 1 beispielhaft als ein Schrauberbit ausgebildet. Alternativ ist denkbar, dass das Einsatzwerkzeug 50a als ein Bohrer o. dgl. ausgebildet ist. Die Werkzeugmaschine 32a weist eine Schaltereinheit 52a auf. Die Schaltereinheit 52a ist zu einer Aktivierung und/oder Deaktivierung eines Motors 54a der Antriebsstrangeinheit 12a vorgesehen. Die Schaltereinheit 52a umfasst einen Betätigungsschalter 56a, das zu einer Aktivierung und/oder Deaktivierung des Motors 54a betätigbar ist. Der Betätigungsschalter 56a ist an dem Handgriff 42a angeordnet. Die Werkzeugmaschinenvorrichtung 10a umfasst eine Schalteinheit 16a. Die Schalteinheit 16a weist ein Betätigungselement 18a auf. Das Betätigungselement 18a ist an einer Oberseite 58a der Werkzeugmaschine 32a angeordnet. Die Oberseite 58a ist dem Handgriff 42a abgewandt.

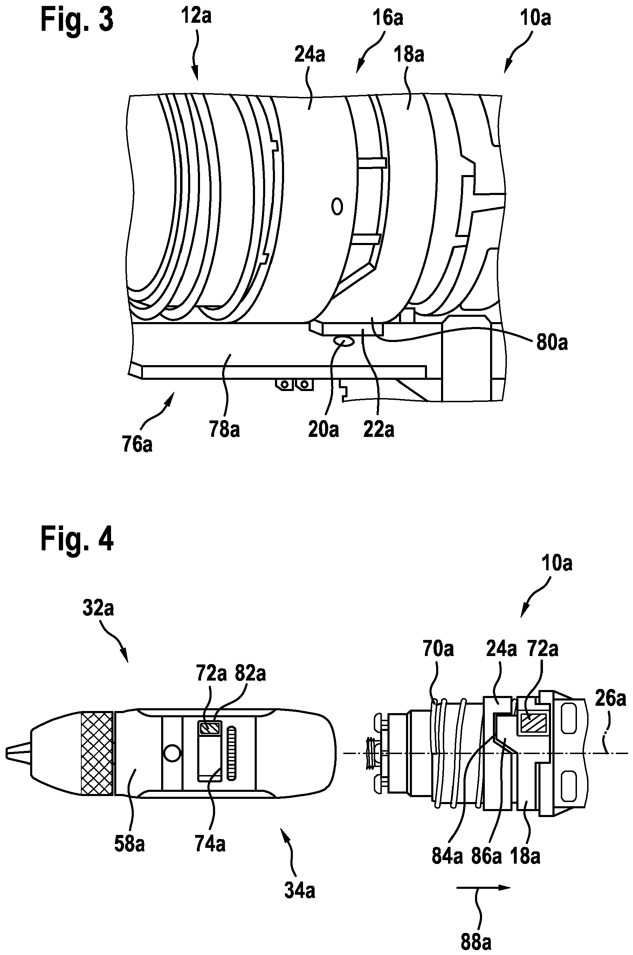

Figur 2 zeigt einen Teil der Werkzeugmaschinenvorrichtung 10a in einer schematischen Schnittdarstellung. Die Werkzeugmaschinenvorrichtung 10a umfasst die Antriebsstrangeinheit 12a. Die Antriebsstrangeinheit 12a umfasst ein Gangschaltelement 14a. Die Antriebsstrangeinheit 12a weist zumindest zwei verschiedene Drehrichtungsmodi und zumindest zwei verschiedene Geschwindigkeitsmodi auf. Die Werkzeugmaschinenvorrichtung 10a umfasst die Schalteinheit 16a. Die Schalteinheit 16a ist zumindest teilweise an der Antriebsstrangeinheit 12a angeordnet. Die Schalteinheit 16a umfasst das Betätigungselement 18a. Das Betätigungselement 18a ist zu einer Auswahl der Drehrichtungsmodi und der Geschwindigkeitsmodi vorgesehen. Die Schalteinheit 16a umfasst ein Schaltelement 20a (vgl. Figur 3). Das Schaltelement 20a ist dazu vorgesehen, in Abhängigkeit von einer Schaltstellung des Betätigungselements 18a zwischen den Drehrichtungsmodi zu schalten. Die Antriebsstrangeinheit 12a umfasst ein Getriebe 60a. Das Getriebe 60a ist als ein Planetengetriebe ausgebildet. Die Antriebsstrangeinheit 12a umfasst ein Getriebegehäuse 62a. Das Getriebegehäuse 62a ist zumindest im Wesentlichen zylinderförmig ausgebildet. Das Getriebe 60a ist zumindest teilweise innerhalb des Getriebegehäuses 62a angeordnet. Die Antriebsstrangeinheit 12a, insbesondere das Getriebe 60a, ist dazu vorgesehen, zumindest eine Bewegungskenngröße des Motors 54a zu ändern. Der Motor 54a ist als ein Elektromotor, insbesondere als ein Gleichstromelektromotor, ausgebildet. Die Bewegungskenngröße des Motors 54a ist als eine Drehrichtung des Motors 54a, als eine Drehgeschwindigkeit des Motors 54a oder als eine andere, einem Fachmann als sinnvoll erscheinende Bewegungskenngröße ausgebildet. Eine Drehrichtung des Motors 54a ist eine Richtung, um die sich eine Antriebswelle 64a des Motors 54a um eine Antriebsachse des Motors 54a dreht. Die Antriebswelle 64a ist als eine Rotorwelle des Motors 54a ausgebildet. Eine Drehgeschwindigkeit des Motors 54a ist eine Geschwindigkeit, mit der sich die Antriebswelle 64a des Motors 54a um die Antriebsachse des Motors 54a dreht. Die Antriebsachse des Motors 54a verläuft zumindest im Wesentlichen parallel, insbesondere koaxial, zu der Abtriebsachse 26a der Antriebsstrangeinheit 12a. Das Getriebe 60a ist mit der Antriebswelle 64a des Motors 54a gekoppelt.

Die Antriebsstrangeinheit 12a, insbesondere das Getriebe 60a, ist dazu vorgesehen, zumindest eine Bewegungskenngröße des Motors 54a, insbesondere nach einer Änderung der Bewegungskenngröße, auf die Abtriebswelle 48a der Werkzeugmaschine 32a zu übertragen. Die Abtriebswelle 48a ist mit der Antriebsstrangeinheit 12a, insbesondere mit dem Getriebe 60a, gekoppelt. Die Abtriebswelle 48a ragt zumindest abschnittsweise in das Getriebegehäuse 62a hinein. An der Abtriebswelle 48a ist die Werkzeugaufnahme 46a der Werkzeugmaschine 32a angeordnet (vgl. Figur 1). Die Werkzeugaufnahme 46a ist mittels eines Gewindes 66a der Abtriebswelle 48a auf die Abtriebswelle 48a aufgeschraubt. Der Übersichtlichkeit halber ist die Werkzeugaufnahme 46a in Figur 2 nicht dargestellt. Die Abtriebswelle 48a ist zu einem, insbesondere um die Abtriebsachse 26a rotierenden, Antrieb der Werkzeugaufnahme 46a und des Einsatzwerkzeugs 50a vorgesehen. Die Abtriebsachse 26a verläuft zumindest im Wesentlichen entlang einer Längsachse der Abtriebswelle 48a. Die Antriebsstrangeinheit 12a, insbesondere der Motor 54a und/oder das Getriebe 60a, weist zumindest einen ersten Drehrichtungsmodus und einen zweiten Drehrichtungsmodus auf. Der Motor 54a weist zumindest einen ersten Drehrichtungsmodus auf, der einer ersten Drehrichtung der Antriebswelle 64a des Motors 54a um die Antriebsachse entspricht. Der Motor 54a weist zumindest einen zweiten Drehrichtungsmodus auf, der einer zweiten, der ersten Drehrichtung entgegengesetzten Drehrichtung der Antriebswelle 64a des Motors 54a um die Antriebsachse entspricht. Das Getriebe 60a ist dazu vorgesehen, die Abtriebswelle 48a entsprechend der Drehrichtung des Motors 54a anzutreiben. Das Getriebe 60a ist in dem ersten Drehrichtungsmodus dazu vorgesehen, die Abtriebswelle 48a in einer ersten Drehrichtung der Abtriebswelle 48a rotierend um die Abtriebsachse 26a anzutreiben. Eine Rotation der Abtriebswelle 48a in der ersten Drehrichtung um die Abtriebsachse 26a entspricht einem Rechtslauf der Abtriebswelle 48a. Das Getriebe 60a ist in dem zweiten Drehrichtungsmodus dazu vorgesehen, die Abtriebswelle 48a in einer zweiten, der ersten Drehrichtung entgegengesetzten, Drehrichtung der Abtriebswelle 48a rotierend um die Abtriebsachse 26a anzutreiben. Eine Rotation der Abtriebswelle 48a in der zweiten Drehrichtung um die Abtriebsachse 26a entspricht einem Linkslauf der Abtriebswelle 48a. Die Werkzeugmaschine 32a ist in dem ersten Drehrichtungsmodus zu einem Einschrauben einer Schraube in ein Werkstück und/oder zu einem Bohren in das Werkstück vorgesehen. Die Werkzeugmaschine 32a ist in dem zweiten Drehrichtungsmodus zu einem Ausschrauben einer Schraube aus einem Werkstück vorgesehen. Die Antriebsstrangeinheit 12a, insbesondere das Getriebe 60a und/oder der Motor 54a, weist zumindest einen ersten Geschwindigkeitsmodus und einen zweiten Geschwindigkeitsmodus auf. Das Getriebe 60a weist zumindest einen ersten Geschwindigkeitsmodus und zumindest einen zweiten Geschwindigkeitsmodus auf, wobei die Geschwindigkeitsmodi unterschiedlichen Schaltstellungen des Getriebes 60a entsprechen. Das Getriebe 60a ist in dem ersten Geschwindigkeitsmodus dazu vorgesehen, die Abtriebswelle 48a mit einer ersten Drehgeschwindigkeit der Abtriebswelle 48a rotierend um die Abtriebsachse 26a anzutreiben. Das Getriebe 60a ist in dem zweiten Geschwindigkeitsmodus dazu vorgesehen, die Abtriebswelle 48a mit einer zweiten Drehgeschwindigkeit der Abtriebswelle 48a rotierend um die Abtriebsachse 26a anzutreiben. Die zweite Drehgeschwindigkeit der Abtriebswelle 48a ist höher als die erste Drehgeschwindigkeit der Abtriebswelle 48a. Es ist denkbar, dass die Antriebsstrangeinheit 12a noch weitere, von dem ersten Geschwindigkeitsmodus und dem zweiten Geschwindigkeitsmodus verschiedene Geschwindigkeitsmodi aufweist. Die Antriebsstrangeinheit 12a, insbesondere das Getriebe 60a ist zumindest zu einer Kombination des ersten Drehrichtungsmodus, insbesondere des Motors 54a, mit dem ersten Geschwindigkeitsmodus und/oder mit dem zweiten Geschwindigkeitsmodus vorgesehen. Die Antriebsstrangeinheit 12a, insbesondere das Getriebe 60a, ist zumindest zu einer Kombination des zweiten Drehrichtungsmodus, insbesondere des Motors 54a, mit dem ersten Geschwindigkeitsmodus und/oder mit dem zweiten Geschwindigkeitsmodus vorgesehen.

Die Schalteinheit 16a ist dazu vorgesehen, zwischen den Drehrichtungsmodi und den Geschwindigkeitsmodi zu schalten. Das Betätigungselement 18a der Schalteinheit 16a ist von einem Nutzer der Werkzeugmaschine 32a bzw. der Werkzeugmaschinenvorrichtung 10a zu einer Auswahl eines Drehrichtungsmodus und/oder eines Geschwindigkeitsmodus vorgesehen. Das Betätigungselement 18a ist zu einer Auswahl eines Drehrichtungsmodus und eines Geschwindigkeitsmodus vorgesehen. Die Schalteinheit 16a weist zu einer Auswahl der Drehrichtungsmodi und der Geschwindigkeitsmodi ein einzelnes Betätigungselement 18a auf. Unterschiedliche Schaltstellungen des einzelnen Betätigungselements 18a entsprechen unterschiedlichen Drehrichtungsmodi und gleichzeitig unterschiedlichen Geschwindigkeitsmodi der Antriebsstrangeinheit 12a. Eine erste Schaltstellung des einzelnen Betätigungselements 18a entspricht dem ersten Drehrichtungsmodus, insbesondere des Motors 54a, und dem ersten Geschwindigkeitsmodus, insbesondere des Getriebes 60a. Eine zweite Schaltstellung des einzelnen Betätigungselements 18a entspricht dem ersten Drehrichtungsmodus, insbesondere des Motors 54a, und dem zweiten Geschwindigkeitsmodus, insbesondere des Getriebes 60a. Eine dritte Schaltstellung des einzelnen Betätigungselements 18a entspricht dem zweiten Drehrichtungsmodus, insbesondere des Motors 54a, und dem ersten Geschwindigkeitsmodus, insbesondere des Getriebes 60a. Alternativ ist vorstellbar, dass das Betätigungselement 18a lediglich zu einer Auswahl eines Drehrichtungsmodus oder eines Geschwindigkeitsmodus vorgesehen ist und dass die Schalteinheit 16a zumindest ein weiteres Betätigungselement aufweist, das zu einer Auswahl eines Drehrichtungsmodus oder eines Geschwindigkeitsmodus, insbesondere eines durch das Betätigungselement 18a nicht auswählbaren Modus, vorgesehen ist. Das Betätigungselement 18a ist als ein Drehschalter ausgebildet. Alternativ ist denkbar, dass das Betätigungselement 18a als ein Schiebeschalter, insbesondere als ein Rotationsschiebeschalter, als ein Linearschiebeschalter, als ein Drückerschalter, als ein Kippschalter, als ein Taster o. dgl. ausgebildet ist. Das Betätigungselement 18a weist eine Mehrzahl von Schaltstellungen auf. Das Betätigungselement 18a weist zumindest eine Schaltstellung, die dem ersten Drehrichtungsmodus entspricht, zumindest eine Schaltstellung, die dem zweiten Drehrichtungsmodus entspricht, zumindest eine Schaltstellung, die dem ersten Geschwindigkeitsmodus entspricht und zumindest eine Schaltstellung, die dem zweiten Geschwindigkeitsmodus entspricht, auf. Die Schaltstellung, die dem ersten Drehrichtungsmodus entspricht und die Schaltstellung, die dem ersten Geschwindigkeitsmodus entspricht, sind durch dieselbe Schaltstellung gebildet.

Die Schalteinheit 16a ist dazu vorgesehen, mechanisch, insbesondere in Abhängigkeit von einer Schaltstellung des Betätigungselements 18a, zwischen den Geschwindigkeitsmodi zu schalten. Das Gangschaltelement 14a ist dazu vorgesehen, zwischen den Geschwindigkeitsmodi zu schalten. Das Gangschaltelement 14a ist mit der Schalteinheit 16a wirkverbunden. Das Gangschaltelement 14a ist als ein Federbügel ausgebildet. Alternativ ist denkbar, dass das Gangschaltelement 14a als ein Zapfen, als ein Stift o. dgl. ausgebildet ist. Das Gangschaltelement 14a ist zumindest im Wesentlichen ringförmig um das Getriebegehäuse 62a angeordnet. Das Gangschaltelement 14a ragt zumindest abschnittsweise in das Getriebegehäuse 62a und das Getriebe 60a hinein. Das Gangschaltelement 14a ist mit dem Getriebe 60a und mit der Schalteinheit 16a mechanisch gekoppelt.

Das Gangschaltelement 14a ist mechanisch mit einem Schaltrad 68a des Getriebes 60a gekoppelt. Das Schaltrad 68a ist als ein Hohlrad ausgebildet. Das Gangschaltelement 14a ist dazu vorgesehen, zu einem Schalten zwischen den Geschwindigkeitsmodi das Schaltrad 68a, insbesondere zumindest im Wesentlichen parallel zu der Abtriebsachse 26a, zu verschieben. Die Geschwindigkeitsmodi der Antriebsstrangeinheit 12a sind abhängig von einer Stellung des Schaltrads 68a. Das Schaltrad 68a schaltet Bauteile, insbesondere Zahnräder, des Getriebes 60a, insbesondere auf eine einem Fachmann bekannte Art und Weise, in Folge einer Verschiebung des Schaltrads 68a. Das Gangschaltelement 14a ist zu einer Verschiebung des Schaltrads 68a beweglich, insbesondere zumindest im Wesentlichen parallel zu der Abtriebsachse 26a beweglich, an dem Getriebegehäuse 62a gelagert.

Die Schalteinheit 16a weist zumindest ein Verschiebungselement 24a auf. Das Verschiebungselement 24a ist mit dem Betätigungselement 18a wirkverbunden. Das Verschiebungselement 24a ist dazu vorgesehen, in Abhängigkeit von einer Schaltstellung des Betätigungselements 18a zwischen den Geschwindigkeitsmodi zu schalten. Das Verschiebungselement 24a ist unmittelbar oder mittelbar mit der Antriebsstrangeinheit 12a gekoppelt. Das Verschiebungselement 24a ist mechanisch mit dem Gangschaltelement 14a gekoppelt. Das Verschiebungselement 24a ist beweglich, insbesondere zumindest im Wesentlichen parallel zu der Abtriebsachse 26a beweglich, an der Antriebsstrangeinheit 12a gelagert. Das Verschiebungselement 24a ist beweglich an dem Getriebegehäuse 62a gelagert. Das Verschiebungselement 24a ist zumindest im Wesentlichen ringförmig um das Getriebegehäuse 62a angeordnet. Das Verschiebungselement 24a ist als ein Verschiebungsring ausgebildet. Das Verschiebungselement 24a ist auf bzw. an einer Feder 70a gelagert. Die Feder 70a übt eine zumindest im Wesentlichen parallel zu der Abtriebsachse 26a gerichtete Kraft auf das Verschiebungselement 24a aus. Das Verschiebungselement 24a ist mechanisch mit dem Betätigungselement 18a gekoppelt und durch das Betätigungselement 18a entgegen der Kraft verschiebbar. Das Verschiebungselement 24a ist dazu vorgesehen, das mit dem Verschiebungselement 24a wirkverbundene Gangschaltelement 14a zu einem Schalten zwischen den Geschwindigkeitsmodi, insbesondere entlang der Abtriebsachse 26a der Antriebsstrangeinheit 12a, zu betätigen. Das Gangschaltelement 14a ist kraft- und/oder formschlüssig mit dem Verschiebungselement 24a verbunden, insbesondere an dem Verschiebungselement 24a fixiert. Alternativ oder zusätzlich ist denkbar, dass das Gangschaltelement 14a stoffschlüssig mit dem Verschiebungselement 24a verbunden, insbesondere einteilig mit dem Verschiebungselement 24a ausgebildet, ist. Das Gangschaltelement 14a stellt eine mechanische Wirkverbindung zwischen dem Verschiebungselement 24a und dem Getriebe 60a, insbesondere dem Schaltrad 68a des Getriebes 60a, her. Das Verschiebungselement 24a betätigt, insbesondere verschiebt, das Gangschaltelement 14a in Folge einer Betätigung des Verschiebungselements 24a. Das Gangschaltelement 14a betätigt, insbesondere verschiebt, das Schaltrad 68a in Folge einer Betätigung des Gangschaltelements 14a durch das Verschiebungselement 24a. Das Betätigungselement 18a ist über das Verschiebungselement 24a und das Gangschaltelement 14a mechanisch wirkverbunden mit dem Getriebe 60a, insbesondere mit dem Schaltrad 68a. Eine Betätigung des Betätigungselements 18a zu einer Auswahl eines Geschwindigkeitsmodus wird über das Verschiebungselement 24a und das Gangschaltelement 14a an das Getriebe 60a, insbesondere das Schaltrad 68a, übertragen. Das Verschiebungselement 24a verschiebt das Gangschaltelement 14a zumindest im Wesentlichen parallel zu der Abtriebsachse 26a und das Gangschaltelement 14a verschiebt das Schaltrad 68a zumindest im Wesentlichen parallel zu der Abtriebsachse 26a.

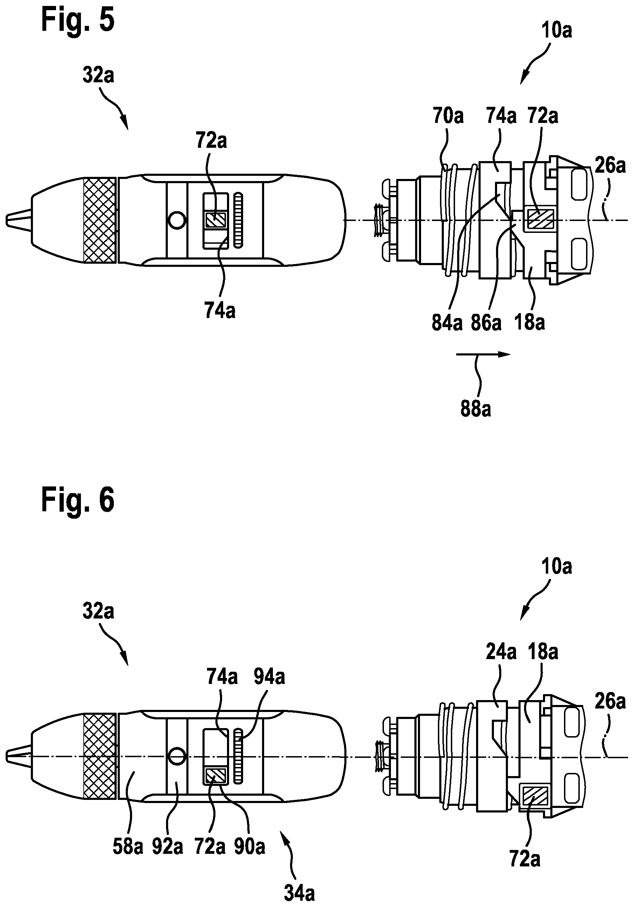

Das Verschiebungselement 24a ist entlang der Abtriebsachse 26a der Antriebsstrangeinheit 12a beweglich an der Antriebsstrangeinheit 12a gelagert. Das Verschiebungselement 24a ist entlang der Abtriebsachse 26a beweglich an der Antriebsstrangeinheit 12a federgelagert. Das Verschiebungselement 24a ist an dem Getriebegehäuse 62a beweglich gelagert, insbesondere federgelagert. Das Verschiebungselement 24a ist zumindest im Wesentlichen ringförmig um die Antriebsstrangeinheit 12a, insbesondere um das Getriebegehäuse 62a, angeordnet. Das Verschiebungselement 24a ist auf bzw. an der Feder 70a gelagert. Die Feder 70a ist als eine Druckfeder ausgebildet. Die Feder 70a ist schraubenfederartig um das Getriebegehäuse 62a angeordnet. Die Feder 70a ist zumindest abschnittsweise zwischen dem Getriebegehäuse 62a und dem Verschiebungselement 24a an dem Getriebegehäuse 62a angeordnet. Das Verschiebungselement 24a ist durch die Feder 70a entlang der Abtriebsachse 26a beweglich an dem Getriebegehäuse 62a gelagert. Die Feder 70a übt eine Kraft zumindest im Wesentlichen parallel zu der Abtriebsachse 26a auf das Verschiebungselement 24a aus, durch die das Verschiebungselement 24a entlang der Abtriebsachse 26a verschiebbar ist. Das Betätigungselement 18a übt über eine zumindest abschnittsweise rampenartige Ausbildung des Betätigungselements 18a und des Verschiebungselements 24a eine entgegen der durch die Feder 70a ausgeübten Kraft wirkende Kraft zumindest im Wesentlichen parallel zu der Abtriebsachse 26a auf das Verschiebungselement 24a aus, durch die das Verschiebungselement 24a entlang der Abtriebsachse 26a verschiebbar ist (vgl. Figur 5). Das Verschiebungselement 24a verschiebt durch eine Bewegung entlang der Abtriebsachse 26a über das Gangschaltelement 14a das Schaltrad 68a und schaltet zwischen den Geschwindigkeitsmodi.

Das Betätigungselement 18a ist zumindest im Wesentlichen ringförmig um die Antriebsstrangeinheit 12a angeordnet. Das Betätigungselement 18a ist zumindest im Wesentlichen ringförmig um das Getriebegehäuse 62a angeordnet. Das Betätigungselement 18a ist als ein Betätigungsring, insbesondere als ein Drehring, ausgebildet. Das Betätigungselement 18a ist um die Abtriebsachse 26a drehbar an dem Getriebegehäuse 62a gelagert. Vorzugsweise liegen das Betätigungselement 18a und das Verschiebungselement 24a in zumindest einer Schaltstellung des Betätigungselements 18a entlang der Abtriebsachse 26a betrachtet zumindest im Wesentlichen formgenau aneinander an (vgl. Figur 4). Das Betätigungselement 18a und das Verschiebungselement 24a sind in zumindest einer Schaltstellung des Betätigungselements 18a entlang der Abtriebsachse 26a betrachtet zumindest abschnittsweise voneinander beabstandet an dem Getriebegehäuse 62a angeordnet (vgl. Figur 5). Das Betätigungselement 18a ist in einem in der Werkzeugmaschine 32a montierten Zustand der Schalteinheit 16a zumindest im Wesentlichen vollständig innerhalb der Gehäuseeinheit 34a der Werkzeugmaschine 32a angeordnet. Das Betätigungselement 18a umfasst einen Betätigungsfortsatz 72a zu einer Betätigung des Betätigungselements 18a. Der Betätigungsfortsatz 72a ragt in einem montierten Zustand der Schalteinheit 16a zumindest abschnittsweise aus der Gehäuseeinheit 34a der Werkzeugmaschine 32a, insbesondere durch eine Betätigungsausnehmung 74a der Gehäuseeinheit 34a, hinaus (vgl. Figur 4).

Figur 3 zeigt einen Teil der Werkzeugmaschinenvorrichtung 10a in einer perspektivischen Darstellung. Dargestellt sind die Antriebsstrangeinheit 12a, das Betätigungselement 18a und das Verschiebungselement 24a. Die Werkzeugmaschinenvorrichtung 10a umfasst das Schaltelement 20a. Die Werkzeugmaschinenvorrichtung 10a umfasst eine Elektronikeinheit 76a. Die Elektronikeinheit 76a weist eine Leiterplatte 78a auf. Das Schaltelement 20a ist an der Leiterplatte 78a angeordnet, insbesondere auf der Leiterplatte 78a fixiert. Das Schaltelement 20a ist dazu vorgesehen, in Abhängigkeit von einer Schaltstellung des Betätigungselements 18a zwischen den Drehrichtungsmodi zu schalten. Das Schaltelement 20a ist dazu vorgesehen, elektronisch zwischen den Drehrichtungsmodi zu schalten. Alternativ oder zusätzlich ist denkbar, dass das Schaltelement 20a dazu vorgesehen ist, in Abhängigkeit von einer Schaltstellung des Betätigungselements 18a, insbesondere elektronisch, zwischen den Geschwindigkeitsmodi zu schalten. Das Schaltelement 20a ist dazu vorgesehen, in der Schaltstellung des Betätigungselements 18a entsprechend dem ersten Drehrichtungsmodus das Getriebe 60a und/oder den Motor 54a, insbesondere elektronisch, in den ersten Drehrichtungsmodus zu schalten. Das Schaltelement 20a ist dazu vorgesehen, in der Schaltstellung des Betätigungselements 18a entsprechend dem zweiten Drehrichtungsmodus das Getriebe 60a und/oder den Motor 54a, insbesondere elektronisch, in den zweiten Drehrichtungsmodus zu schalten. Das Schaltelement 20a ist elektronisch und mechanisch mit der Elektronikeinheit 76a der Werkzeugmaschinenvorrichtung 10a verbunden. An der Leiterplatte 78a kann beispielsweise ein Mikroprozessor, ein integrierter Schaltkreis, insbesondere ein anwendungsspezifischer integrierter Schaltkreis, eine logische elektronische Schaltung o. dgl. angeordnet sein, was der Übersichtlichkeit halber nicht weiter dargestellt ist. Das Schaltelement 20a ist elektrisch bzw. elektronisch mit der Leiterplatte 78a verbunden.

Das Schaltelement 20a ist dazu vorgesehen, eine Schaltstellung des Betätigungselements 18a zu erfassen und in Abhängigkeit der erfassten Schaltstellung des Betätigungselements 18a der Elektronikeinheit 76a ein, insbesondere elektronisches, Signal zu einem Schalten des Drehrichtungsmodus bereitzustellen. Die Elektronikeinheit 76a schaltet in Abhängigkeit von dem Signal des Schaltelements 20a das Getriebe 60a und/oder den Motor 54a in den entsprechenden Drehrichtungsmodus. Die Elektronikeinheit 77a schaltet den Motor 54a in den entsprechenden Drehrichtungsmodus. Die Elektronikeinheit 76a passt in Abhängigkeit von dem Signal des Schaltelements 20a eine elektrische Polung des Motors 54a entsprechend einem gewählten Drehrichtungsmodus an. Alternativ ist denkbar, dass die Werkzeugmaschinenvorrichtung 10a einen, insbesondere mechanischen, Mechanismus aufweist, der das Getriebe 60a, insbesondere mittels des Gangschaltelements 14a, in Abhängigkeit von einer erfassten Schaltstellung des Betätigungselements 18a, insbesondere in Abhängigkeit eines Signals des Schaltelements 20a, in den entsprechenden Drehrichtungsmodus schaltet. Das Schaltelement 20a ist zu einer berührungslosen Erfassung einer Schaltstellung des Betätigungselements 18a vorgesehen. Das Schaltelement 20a kann eine Position des Betätigungselements 18a und/oder eine Position eines mit dem Betätigungselement 18a gekoppelten, insbesondere zumindest teilweise an dem Betätigungselement 18a angeordneten, Aktivierungselements 22a der Schalteinheit 16a zu einer Erfassung der Schaltstellung des Betätigungselements 18a erfassen. Das Schaltelement 20a ist als ein Sensor ausgebildet.

Die Schalteinheit 16a umfasst zumindest ein dem Betätigungselement 18a zugeordnetes Aktivierungselement 22a. Das Aktivierungselement 22a ist dazu vorgesehen, das Schaltelement 20a zu betätigen. Das Aktivierungselement 22a ist dazu vorgesehen, das Schaltelement 20a zu einer Erfassung einer Schaltstellung des Betätigungselements 18a zu betätigen. Das Aktivierungselement 22a ist zumindest wirkverbunden mit dem Betätigungselement 18a. Das Aktivierungselement 22a ist zumindest kraft- und/oder formschlüssig an dem Betätigungselement 18a fixiert. Alternativ ist denkbar, dass das Aktivierungselement 22a stoffschlüssig mit dem Betätigungselement 18a verbunden, insbesondere einteilig mit dem Betätigungselement 18a ausgebildet, ist. Das Aktivierungselement 22a kann zumindest teilweise in das Betätigungselement 18a integriert sein. Das Betätigungselement 18a kann zumindest teilweise als Aktivierungselement 22a ausgebildet sein bzw. eine Funktion eines Aktivierungselements 22a erfüllen. Das Aktivierungselement 22a kann auch separat zu dem Betätigungselement 18a ausgebildet sein. Die Schalteinheit 16a kann eine Mehrzahl von Aktivierungselementen 22a aufweisen, von denen zumindest ein Aktivierungselement 22a separat von dem Betätigungselement 18a ausgebildet ist. Das Aktivierungselement 22a kann mehrteilig ausgebildet sein, wobei zumindest ein Teil des Aktivierungselements 22a an dem Betätigungselement 18a fixiert ist und zumindest ein weiterer Teil des Aktivierungselements 22a separat zu dem Betätigungselement 18a ausgebildet ist. Das Aktivierungselement 22a ist zu einer berührungslosen Betätigung des Schaltelements 20a vorgesehen. Das Aktivierungselement 22a schaltet das Schaltelement 20a in unterschiedlichen Positionen des Aktivierungselements 22a unterschiedlich. Eine Position des Aktivierungselements 22a ist abhängig von, insbesondere proportional zu, einer Schaltstellung des Betätigungselements 18a. Unterschiedliche Positionen des Aktivierungselements 22a entsprechen unterschiedlichen Drehrichtungsmodi.

Das Aktivierungselement 22a ist zu einer berührungslosen, insbesondere magnetischen, Betätigung des Schaltelements 20a vorgesehen ist. Das Aktivierungselement 22a ist zu einer magnetischen Betätigung des Schaltelements 20a zumindest teilweise magnetisch ausgebildet. Das Aktivierungselement 22a ist als ein Magnet ausgebildet. Das Aktivierungselement 22a ist als ein Permanentmagnet, beispielsweise aus Eisen, Kobalt, Nickel o. dgl., ausgebildet. Alternativ ist vorstellbar, dass das Aktivierungselement 22a als ein Elektromagnet, beispielsweise in Form einer Spule, ausgebildet ist. Es ist vorstellbar, dass das Betätigungselement 18a zu einer Ausbildung des Aktivierungselements 22a zumindest teilweise magnetisch ausgebildet ist. Alternativ ist denkbar, dass das Aktivierungselement 22a zu einer von einer magnetischen Betätigung des Schaltelements 20a verschiedenen berührungslosen Betätigung des Schaltelements 20a vorgesehen ist, beispielsweise zu einer optischen, einer thermischen, einer kapazitiven oder einer anderen, einem Fachmann als sinnvoll erscheinenden Betätigung des Schaltelements 20a. Zu einer optischen Betätigung des Schaltelements 20a kann das Aktivierungselement 22a als eine Lichtquelle, als ein Lichtabsorber o. dgl. ausgebildet sein. Zu einer thermischen Betätigung des Schaltelements 20a kann das Aktivierungselement 22a als eine Wärmequelle, als eine Kältequelle o. dgl. ausgebildet sein. Zu einer kapazitiven Betätigung des Schaltelements 20a kann das Aktivierungselement 22a als eine Elektrode, als ein Dielektrikum o. dgl. ausgebildet sein. Das Aktivierungselement 22a ist auf einer Seite 80a des Betätigungselements 18a angeordnet, die dem Schaltelement 20a in zumindest einer Schaltstellung des Betätigungselements 18a zugewandt ist. Alternativ ist denkbar, dass das Aktivierungselement 22a die Seite 80a des Betätigungselements 18a zumindest teilweise ausbildet. Eine dem Schaltelement 20a zugewandte Position des Aktivierungselements 22a und eine dem Schaltelement 20a abgewandte Position des Aktivierungselements 22a entsprechen zwei unterschiedlichen Schaltstellungen des Betätigungselements 18a und zwei unterschiedlichen Drehrichtungsmodi, insbesondere dem ersten Drehrichtungsmodus bzw. dem zweiten Drehrichtungsmodus.

Das Schaltelement 20a ist als ein Sensor ausgebildet. Das Schaltelement 20a ist als ein Magnetsensor ausgebildet. Das Schaltelement 20a ist als ein Hall-Sensor ausgebildet. Alternativ ist denkbar, dass das Schaltelement 20a als ein optischer Sensor, beispielsweise als eine Lichtschranke, als ein Helligkeitssensor, als ein Laserscanner o. dgl., als ein thermischer Sensor, insbesondere als ein Temperatursensor, als ein kapazitiver Sensor oder als ein anderer, einem Fachmann als sinnvoll erscheinender Sensor ausgebildet ist. Das Schaltelement 20a ist als ein berührungsloser Sensor ausgebildet. Das Schaltelement 20a ist durch die Akkueinheit 40a der Werkzeugmaschine 32a über die Elektronikeinheit 76a mit elektrischer Energie versorgbar und/oder betreibbar. Das Schaltelement 20a erfasst eine magnetische Feldstärke, deren Größe abhängig von einer Schaltstellung des Betätigungselements 18a ist. Unterschiedliche erfasste magnetische Feldstärken entsprechen unterschiedlichen Schaltstellungen des Betätigungselements 18a. Die magnetische Feldstärke geht von dem magnetischen Aktivierungselement 22a der Schalteinheit 16a aus. Das Schaltelement 20a stellt der Elektronikeinheit 76a in Abhängigkeit von der erfassten magnetischen Feldstärke ein elektrisches bzw. elektronisches Signal bereit. In Abhängigkeit von dem elektrischen bzw. elektronischen Signal schaltet die Elektronikeinheit 76a das Getriebe 60a und/oder den Motor 54a in einen entsprechenden Drehrichtungsmodus.

Figur 4 zeigt eine erste Schaltstellung des Betätigungselements 18a der Schalteinheit 16a der Werkzeugmaschinenvorrichtung 10a in einer schematischen Draufsicht. Dargestellt ist die Oberseite 58a der Werkzeugmaschine 32a und die Werkzeugmaschinenvorrichtung 10a. Auf der linken Seite dargestellt ist eine Ansicht eines Nutzers auf die Werkzeugmaschine 32a. Auf der rechten Seite dargestellt ist die Werkzeugmaschinenvorrichtung 10a, insbesondere Positionen einzelner Bauteile der Werkzeugmaschinenvorrichtung 10a in Abhängigkeit von einer Schaltstellung des Betätigungselements 18a. Das Betätigungselement 18a umfasst den Betätigungsfortsatz 72a, der zumindest teilweise aus der Betätigungsausnehmung 74a der Gehäuseeinheit 34a herausragt. Das Betätigungselement 18a ist mittels des Betätigungsfortsatzes 72a um die Abtriebsachse 26a drehbar. Das Betätigungselement 18a befindet sich in einer ersten Schaltstellung. Die erste Schaltstellung des Betätigungselements 18a entspricht dem ersten Drehrichtungsmodus und dem zweiten Geschwindigkeitsmodus. Der Betätigungsfortsatz 72a liegt an einem ersten Endanschlag 82a der Betätigungsausnehmung 74a an. Das Betätigungselement 18a und/oder das Verschiebungselement 24a sind/ist zu einer Betätigung des Verschiebungselements 24a zumindest abschnittsweise rampenartig ausgebildet. Das Betätigungselement 18a und das Verschiebungselement 24a sind zu einer Betätigung des Verschiebungselements 24a zumindest abschnittsweise rampenartig ausgebildet. Die zumindest abschnittsweise rampenartige Ausbildung des Betätigungselements 18a und des Verschiebungselements 24a sind dazu vorgesehen, eine Rotationsbewegung des Betätigungselements 18a in eine Translationsbewegung des Verschiebungselements 24a zumindest im Wesentlichen parallel zu der Abtriebsachse 26a zu wandeln. Das Verschiebungselement 24a weist zumindest eine rampenartige Aussparung 84a auf. Das Verschiebungselement 24a weist die rampenartige Aussparung 84a auf einer dem Betätigungselement 18a zugewandten Seite des Verschiebungselements 24a auf. Das Betätigungselement 18a weist zumindest einen rampenartigen Fortsatz 86a auf. Das Betätigungselement 18a weist den rampenartigen Fortsatz 86a auf einer dem Verschiebungselement 24a zugewandten Seite des Betätigungselements 18a auf. Vorzugsweise greift der rampenartige Fortsatz 86a in zumindest einer Schaltstellung des Betätigungselements 18a zumindest im Wesentlichen formgenau in die rampenartige Aussparung 84a ein. Der rampenartige Fortsatz 86a greift in der ersten Schaltstellung des Betätigungselements 18a zumindest im Wesentlichen formgenau in die rampenartige Aussparung 84a ein. Das Verschiebungselement 24a wird durch eine entlang einer ersten Richtung 88a zumindest im Wesentlichen parallel zu der Abtriebsachse 26a wirkenden Kraft der Feder 70a gegen das Betätigungselement 18a gedrückt.

Figur 5 zeigt eine zweite Schaltstellung des Betätigungselements 18a der Schalteinheit 16a der Werkzeugmaschinenvorrichtung 10a in einer schematischen Draufsicht. Eine Darstellung ist zumindest im Wesentlichen analog zu einer Darstellung der Figur 4. Das Betätigungselement 18a befindet sich in einer zweiten Schaltstellung. Die zweite Schaltstellung des Betätigungselements 18a entspricht dem ersten Drehrichtungsmodus und dem ersten Geschwindigkeitsmodus. Der Betätigungsfortsatz 72a befindet sich in einer mittleren Position in der Betätigungsausnehmung 74a. Das Verschiebungselement 24a ist im Vergleich zu einer Position des Verschiebungselements 24a in Figur 4 entgegen der ersten Richtung 88a zumindest im Wesentlichen parallel zu der Abtriebsachse 26a verschoben. Das Verschiebungselement 24a kann mittels der rampenartigen Aussparung 84a entlang des rampenartigen Fortsatzes 86a zumindest im Wesentlichen senkrecht zu einer Rotationsrichtung des Betätigungselements 18a gleiten. Das Verschiebungselement 24a ist durch die rampenartige Aussparung 84a und durch den rampenartigen Fortsatz 86a entgegen der durch die Feder 70a, auf bzw. an der das Verschiebungselement 24a gelagert ist, auf das Verschiebungselement 24a ausgeübten Kraft verschoben. Das Verschiebungselement 24a ist durch die rampenartige Aussparung 84a und durch den rampenartigen Fortsatz 86a in Folge einer Teildrehung des Betätigungselements 18a um die Abtriebsachse 26a entgegen der durch die Feder 70a auf das Verschiebungselement 24a ausgeübten Kraft verschoben. Der rampenartige Fortsatz 86a ist in der zweiten Schaltstellung des Betätigungselements 18a zumindest teilweise, bevorzugt vollständig, aus der rampenartigen Aussparung 84a ausgeschoben. Durch die Verschiebung des Verschiebungselements 24a entlang der Abtriebsache 26a sind das Gangschaltelement 14a und das Schaltrad 68a im Vergleich zu der Schaltstellung des Betätigungselements 18a in Figur 4 zumindest im Wesentlichen parallel zu der Abtriebsachse 26a verschoben. Das Getriebe 60a befindet sich in einem im Vergleich zu einem Zustand in Figur 4 verschiedenen Geschwindigkeitsmodus.

Figur 6 zeigt eine dritte Schaltstellung des Betätigungselements 18a der Schalteinheit 16a der Werkzeugmaschinenvorrichtung 10a in einer schematischen Draufsicht. Eine Darstellung ist zumindest im Wesentlichen analog zu einer Darstellung der Figuren 4 und 5. Das Betätigungselement 18a befindet sich in einer dritten Schaltstellung. Die dritte Schaltstellung des Betätigungselements 18a entspricht dem zweiten Drehrichtungsmodus und dem ersten Geschwindigkeitsmodus. Der Betätigungsfortsatz 72a liegt an einem zweiten Endanschlag 90a der Betätigungsausnehmung 74a an. Das Verschiebungselement 24a befindet sich in derselben Position wie in Figur 5. Das Gangschaltelement 14a und das Schaltrad 68a befinden sich in derselben Position wie in Figur 5. Das Getriebe 60a befindet sich in demselben Geschwindigkeitsmodus wie in Figur 5. Das Betätigungselement 18a ist im Vergleich zu der zweiten Schaltstellung des Betätigungselements 18a weiter um die Abtriebsachse 26a gedreht. Das Aktivierungselement 22a betätigt in der dritten Schaltstellung des Betätigungselements 18a das Schaltelement 20a. Das Schaltelement 20a schaltet in der dritten Schaltstellung des Betätigungselements 18a das Getriebe 60a und/oder den Motor 54a, insbesondere elektronisch, in den zweiten Drehrichtungsmodus.

Die Gehäuseeinheit 34a weist ein Kennzeichnungselement 92a auf. Das Kennzeichnungselement 92a ist zumindest zu einer Kennzeichnung der Werkzeugmaschine 32a vorgesehen. Das Kennzeichnungselement 92a ist auf der Oberseite 58a der Werkzeugmaschine 32a angeordnet. Das Kennzeichnungselement 92a erstreckt sich zumindest im Wesentlichen parallel zu der Betätigungsausnehmung 74a. Das Kennzeichnungselement 92a erstreckt sich zumindest im Wesentlichen senkrecht zu der Abtriebsachse 26a. Die Gehäuseeinheit 34a weist eine Belüftungsöffnung 94a auf. Die Belüftungsöffnung 94a ist zu einem Auslass von, insbesondere zu einer Kühlung des Motors 54a vorgesehener, Luft aus der Gehäuseeinheit 34a vorgesehen. Die Belüftungsöffnung 94a ist auf der Oberseite 58a der Werkzeugmaschine 32a angeordnet. Die Belüftungsöffnung 94a erstreckt sich zumindest im Wesentlichen parallel zu der Betätigungsausnehmung 74a. Die Belüftungsöffnung 94a erstreckt sich zumindest im Wesentlichen senkrecht zu der Abtriebsachse 26a. Die Betätigungsausnehmung 74a ist entlang der Abtriebsachse 26a betrachtet zwischen dem Kennzeichnungselement 92a und der Belüftungsöffnung 94a angeordnet.

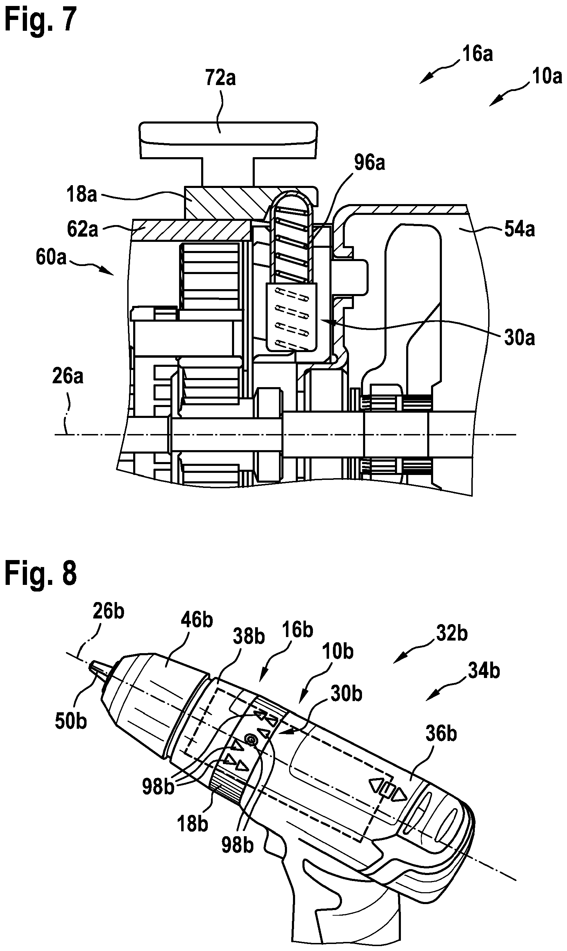

Figur 7 zeigt einen Teil der Werkzeugmaschinenvorrichtung 10a in einer schematischen Schnittdarstellung. Dargestellt sind ein Teil des Getriebes 60a und ein Teil des Motors 54a. Das Betätigungselement 18a ist an dem Getriebegehäuse 62a gelagert. Die Schalteinheit 16a weist zumindest eine Ausgabeeinheit 30a auf. Die Ausgabeeinheit 30a ist zu einer optischen, akustischen und/oder haptischen Ausgabe in Abhängigkeit von einer Betätigung und/oder Schaltstellung des Betätigungselements 18a vorgesehen. Im vorliegenden Ausführungsbeispiel ist die Ausgabeeinheit 30a zu einer haptischen Ausgabe vorgesehen. Die Ausgabeeinheit 30a ist zumindest teilweise an dem Betätigungselement 18a angeordnet. Die Ausgabeeinheit 30a weist ein Rastfederelement 96a auf. Alternativ oder zusätzlich ist denkbar, dass die Ausgabeeinheit 30a zu einer haptischen Ausgabe einen Vibrationsmotor aufweist, der dazu vorgesehen ist, in Abhängigkeit von unterschiedlichen Schaltstellungen des Betätigungselements 18a unterschiedliche Vibrationen, Vibrationsfolgen, Vibrationsdauern o. dgl. auszugeben. Das

Rastfederelement 96a ist zumindest im Wesentlichen radial zu der Abtriebsachse 26a angeordnet. Das Rastfederelement 96a ist zumindest teilweise innerhalb des Getriebegehäuses 62a angeordnet. Das Rastfederelement 96a ist dazu vorgesehen, eine zumindest im Wesentlichen radial von der Abtriebsachse 26a weggerichtete Kraft auf das Betätigungselement 18a auszuüben. Das Betätigungselement 18a weist zumindest eine Rastausnehmung auf, die in zumindest einer Schaltstellung des Betätigungselements 18a mit dem Rastfederelement 96a, insbesondere lösbar, verrastbar ist. Die Rastausnehmung ist mit einem federbetätigten Rastbolzen des Rastfederelements 96a verrastbar. Das Betätigungselement 18a weist eine Mehrzahl von Rastausnehmungen auf, wobei jeweils eine Rastausnehmung jeweils eine Schaltstellung des Betätigungselements 18a repräsentiert. Eine Verrastung des Rastfederelements 96a mit einer Rastausnehmung ist, insbesondere bei einer Betätigung des Betätigungselements 18a, haptisch spürbar. Alternativ oder zusätzlich zu einer haptischen Ausgabe ist denkbar, dass die Ausgabeeinheit 30a zu einer akustischen Ausgabe vorgesehen ist. Die Ausgabeeinheit 30a kann zu einer akustischen Ausgabe zumindest einen Lautsprecher aufweisen. Der Lautsprecher ist dazu vorgesehen, in Abhängigkeit von unterschiedlichen Schaltstellungen des Betätigungselements 18a unterschiedliche Töne, Tonfolgen, Tonanzahlen, Ansagen o. dgl. auszugeben.

In den Figuren 8 bis 15 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In dem Ausführungsbeispiel der Figuren 8 bis 15 ist der Buchstabe a durch den Buchstaben b ersetzt.

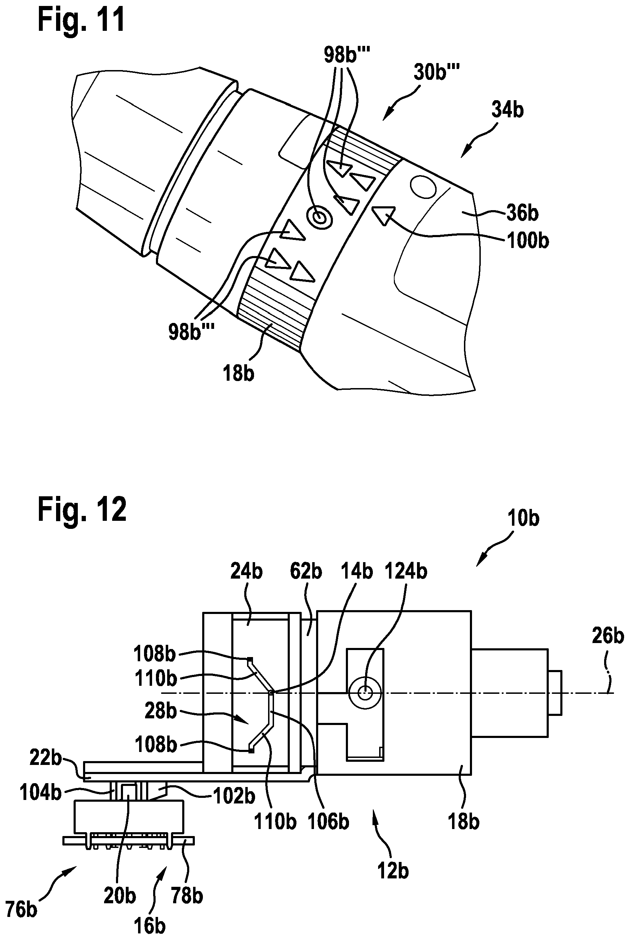

Figur 8 zeigt eine alternative Werkzeugmaschine 32b in einer perspektivischen Darstellung. Die Werkzeugmaschine 32b umfasst eine Gehäuseeinheit 34b, eine Werkzeugaufnahme 46b und ein Einsatzwerkzeug 50b. Die Werkzeugmaschine 32b umfasst eine Werkzeugmaschinenvorrichtung 10b. Die Werkzeugmaschinenvorrichtung 10b ist zumindest teilweise innerhalb der Gehäuseeinheit 34b angeordnet. Die Werkzeugmaschinenvorrichtung 10b weist eine Schalteinheit 16b auf. Die Schalteinheit 16b umfasst ein Betätigungselement 18b. Die Schalteinheit 16b umfasst ein einzelnes Betätigungselement 18b. Das Betätigungselement 18b ist zwischen einem ersten Gehäuseschalenelement 36b und einem zweiten Gehäuseschalenelement 38b der Gehäuseeinheit 34b angeordnet. Das Betätigungselement 18b ist zumindest im Wesentlichen ringförmig um eine Antriebsstrangeinheit 12a der Werkzeugmaschinenvorrichtung 10b angeordnet (vgl. Figur 12). Das Betätigungselement 18b ist zumindest im Wesentlichen ringförmig um eine Abtriebsachse 26b der Antriebsstrangeinheit 12b angeordnet. Das Betätigungselement 18b ist als ein Drehschalter ausgebildet.

Die Schalteinheit 16b weist eine Ausgabeeinheit 30b auf. Die Ausgabeeinheit 30b ist zu einer optischen Ausgabe in Abhängigkeit von einer Betätigung und/oder Schaltstellung des Betätigungselements 18b vorgesehen. Die Ausgabeeinheit 30b ist an dem Betätigungselement 18b angeordnet. Die Ausgabeeinheit 30b weist zu einer optischen Ausgabe zumindest ein Anzeigeelement 98b auf. Die Ausgabeeinheit 30b weist fünf Anzeigeelemente 98b auf. Die Anzeigeelemente 98b sind als statische Anzeigeelemente 98b ausgebildet. Ein statisches Anzeigeelement 98b repräsentiert zumindest einen Drehrichtungsmodus und/oder Geschwindigkeitsmodus. Die statischen Anzeigeelemente 98b sind als Symbole ausgebildet. Zwei der Anzeigeelemente 98b sind als Pfeile ausgebildet. Zwei der Anzeigeelemente 98b sind als Doppelpfeile ausgebildet. Eines der Anzeigeelemente 98b ist als ein Kreis ausgebildet. Ein als ein in Richtung des Einsatzwerkzeugs 50b zeigender Pfeil ausgebildetes Anzeigeelement 98b repräsentiert den ersten Drehrichtungsmodus und den ersten Geschwindigkeitsmodus. Ein als ein von dem Einsatzwerkzeug 50b wegzeigender Pfeil ausgebildetes Anzeigeelement 98b repräsentiert den zweiten Drehrichtungsmodus und den ersten Geschwindigkeitsmodus. Ein als ein in Richtung des Einsatzwerkzeugs 50b zeigender Doppelpfeil ausgebildetes Anzeigeelement 98b repräsentiert den ersten Drehrichtungsmodus und den zweiten Geschwindigkeitsmodus. Ein als ein von dem Einsatzwerkzeug 50b wegzeigender Doppelpfeil ausgebildetes Anzeigeelement 98b repräsentiert den zweiten Drehrichtungsmodus und den zweiten Geschwindigkeitsmodus. Ein als ein Kreis ausgebildetes Anzeigeelement 98b repräsentiert eine Neutralstellung des Betätigungselements 18b. Alternativ ist denkbar, dass das Betätigungselement 18b neutralstellungsfrei ausgebildet ist. Die Anzeigeelemente 98b sind entsprechend unterschiedlichen Schaltstellungen des Betätigungselements 18b an dem Betätigungselement 18b angeordnet. Die Anzeigeelemente 98b sind auf das Betätigungselement 18b aufgedruckt.

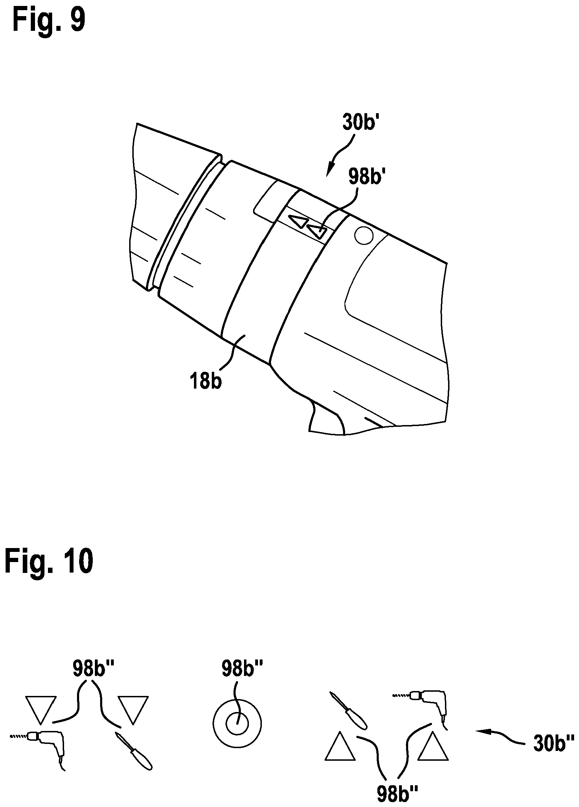

Figur 9 zeigt eine erste Alternative einer Ausgabeeinheit 30b' in einer perspektivischen Darstellung. Die Ausgabeeinheit 30b' weist Anzeigeelemente 98b' auf, die analog zu den Anzeigeelementen 98b der Ausgabeeinheit 30b aus Figur 8 ausgebildet sind. Die Ausgabeeinheit 30b' ist derart ausgebildet, dass lediglich eines der Anzeigeelemente 98b' entsprechend einer Schaltstellung des Betätigungselements 18b angezeigt wird. In Figur 9 ist beispielhaft ein als ein in Richtung des Einsatzwerkzeugs 50b zeigender Doppelpfeil ausgebildetes Anzeigeelement 98b' dargestellt.

Figur 10 zeigt eine zweite Alternative einer Ausgabeeinheit 30b" in einer schematischen Darstellung. Die Ausgabeeinheit 30b" weist fünf Anzeigeelemente 98b" auf. In Figur 10 sind Symbole dargestellt, die auf das Betätigungselement 18b aufbringbar, insbesondere aufdruckbar, sind. Zwei der Anzeigeelemente 98b" sind als Pfeile in Kombination mit einem schematischen Schraubendreher ausgebildet. Zwei der Anzeigeelemente 98b" sind als Pfeile in Kombination mit einer schematischen Bohrmaschine ausgebildet. Eines der Anzeigeelemente 98b" ist als ein Kreis ausgebildet. Ein als ein in Richtung des Einsatzwerkzeugs 50b zeigender Pfeil in Kombination mit einem schematischen Schraubendreher ausgebildetes Anzeigeelement 98b" repräsentiert den ersten Drehrichtungsmodus und den ersten Geschwindigkeitsmodus. Ein als ein von dem Einsatzwerkzeug 50b wegzeigender Pfeil in Kombination mit einem schematischen Schraubendreher ausgebildetes Anzeigeelement 98b" repräsentiert den zweiten Drehrichtungsmodus und den ersten Geschwindigkeitsmodus. Ein als ein in Richtung des Einsatzwerkzeugs 50b zeigender Pfeil in Kombination mit einer schematischen Bohrmaschine ausgebildetes Anzeigeelement 98b" repräsentiert den ersten Drehrichtungsmodus und den zweiten Geschwindigkeitsmodus. Ein als ein von dem Einsatzwerkzeug 50b wegzeigender Pfeil in Kombination mit einer schematischen Bohrmaschine ausgebildetes Anzeigeelement 98b" repräsentiert den zweiten Drehrichtungsmodus und den zweiten Geschwindigkeitsmodus. Ein als ein Kreis ausgebildetes Anzeigeelement 98b" repräsentiert eine Neutralstellung des Betätigungselements 18b.

Figur 11 zeigt eine dritte Alternative einer Ausgabeeinheit 30b‴ in einer perspektivischen Darstellung. Die Ausgabeeinheit 30b‴ umfasst fünf Anzeigeelemente 98b'". Die Anzeigeelemente 98b‴ sind zumindest im Wesentlichen analog zu den Anzeigeelementen 98b der in Figur 8 dargestellten Ausgabeeinheit 30b ausgebildet. Die Anzeigeelemente 98b‴ sind zumindest im Wesentlichen analog zu den Anzeigeelementen 98b der in Figur 8 dargestellten Ausgabeeinheit 30b an dem Betätigungselement 18b angeordnet. Die Ausgabeeinheit 30b‴ weist ein weiteres Anzeigeelement 100b auf. Das weitere Anzeigeelement 100b ist als ein dynamisches Anzeigeelement 100b ausgebildet. Das weitere Anzeigeelement 100b ist als eine LED ausgebildet. Alternativ ist denkbar, dass das weitere Anzeigeelement 100b als ein Bildschirm o. dgl. ausgebildet ist. Das weitere Anzeigeelement 100b weist eine Pfeilform auf. Das weitere Anzeigeelement 100b ist zumindest teilweise in die Gehäuseeinheit 34b, insbesondere in das erste Gehäuseschalenelement 36b integriert. Das weitere Anzeigeelement 100b ist dazu vorgesehen, in Abhängigkeit von unterschiedlichen Schaltstellungen des Betätigungselements 18b unterschiedliche Symbole, Farben, Blinkgeschwindigkeiten o. dgl. darzustellen. Es ist vorstellbar, dass die Ausgabeeinheit 30b‴ frei von den Anzeigeelementen 98b‴ ausgebildet ist und lediglich zumindest ein weiteres Anzeigeelement 100b umfasst.

Figur 12 zeigt die Werkzeugmaschinenvorrichtung 10b in einer schematischen Darstellung. Die Werkzeugmaschinenvorrichtung 10b umfasst die Antriebsstrangeinheit 12b und die Schalteinheit 16b. An dem Getriebegehäuse 62b ist das Betätigungselement 18b angeordnet. Das Betätigungselement 18b ist im Vergleich zu den vorhergehenden Figuren vereinfacht dargestellt. An dem Getriebegehäuse 62b ist ein Verschiebungselement 24b der Schalteinheit 16b angeordnet. Das Verschiebungselement 24b ist über ein Aktivierungselement 22b der Schalteinheit 16b in einem festen Abstand, insbesondere entlang der Abtriebsachse 26b, mit dem Betätigungselement 18b verbunden. Die Schalteinheit 16b weist ein Schaltelement 20b auf. Das Schaltelement 20b ist elektrisch mit einer Elektronikeinheit 76b der Werkzeugmaschinenvorrichtung 10b verbunden.

Das Schaltelement 20b ist an einer Leiterplatte 78b der Elektronikeinheit 76b angeordnet.

Das Aktivierungselement 22b ist zu einer mechanischen Betätigung des Schaltelements 20b vorgesehen. Das Aktivierungselement 22b ist als eine Schaltstange ausgebildet. Alternativ ist denkbar, dass das Aktivierungselement 22b als ein Schaltknopf, als ein Aktivierungsfortsatz, insbesondere des Betätigungselements 18b, o. dgl. ausgebildet ist. Das Aktivierungselement 22b ist dazu vorgesehen, das Schaltelement 20b zu einer mechanischen Betätigung zu verschieben. Das Aktivierungselement 22b ist dazu vorgesehen, das Schaltelement 20b zumindest im Wesentlichen parallel zu der Abtriebsachse 26b zu verschieben. Alternativ ist denkbar, dass das Aktivierungselement 22b dazu vorgesehen ist, das Schaltelement 20b zu einer mechanischen Betätigung zu drücken, zu verkippen, zu verdrehen o. dgl. Das Aktivierungselement 22b weist einen ersten Schaltfortsatz 102b und einen zweiten Schaltfortsatz 104b auf. Das Schaltelement 20b ist in zumindest einer Schaltstellung des Betätigungselement 18b zwischen dem ersten Schaltfortsatz 102b und dem zweiten Schaltfortsatz 104b angeordnet. Der erste Schaltfortsatz 102b und der zweite Schaltfortsatz 104b sind auf einer dem Getriebegehäuse 62b abgewandten Seite des Aktivierungselements 22b angeordnet. Der erste Schaltfortsatz 102b und der zweite Schaltfortsatz 104b sind einteilig mit dem Aktivierungselement 22b ausgebildet. Alternativ ist denkbar, dass der erste Schaltfortsatz 102b und/oder der zweite Schaltfortsatz 104b stoffschlüssig, kraft- und/oder formschlüssig o. dgl. mit dem Aktivierungselement 22b verbunden sind/ist. Der erste Schaltfortsatz 102b und der zweite Schaltfortsatz 104b sind zumindest im Wesentlichen parallel zueinander ausgerichtet und entlang der Abtriebsachse 26b betrachtet beabstandet voneinander angeordnet. Der erste Schaltfortsatz 102b und der zweite Schaltfortsatz 104b erstrecken sich winklig zu der Abtriebsachse 26b. In Abhängigkeit von einer Schaltstellung des Betätigungselements 18b betätigt der erste Schaltfortsatz 102b oder der zweite Schaltfortsatz 104b das Schaltelement 20b. Das Aktivierungselement 22b ist auf einer Seite des Betätigungselements 18b angeordnet, die dem Schaltelement 20b in zumindest einer Schaltstellung des Betätigungselements 18b zugewandt ist.

Das Schaltelement 20b ist als ein mechanischer Schalter ausgebildet. Alternativ ist vorstellbar, dass das Schaltelement 20b als ein Signalschalter ausgebildet ist. Das Schaltelement 20b ist alternativ zu einer Ausbildung als ein Sensor, insbesondere als ein Hall-Sensor, als ein mechanischer Schalter ausgebildet. Es ist denkbar, dass die Schalteinheit 16b zumindest ein weiteres als ein Sensor, insbesondere als ein Hall-Sensor, ausgebildetes Schaltelement und das als ein mechanischer Schalter ausgebildetes Schaltelement 20b, insbesondere zu einem redundanten Schalten zwischen den Drehrichtungsmodi, aufweist. Das Schaltelement 20b ist als ein Schiebeschalter ausgebildet. Alternativ ist denkbar, dass das Schaltelement 20b als ein Drückerschalter, als ein Wippschalter, als ein Drehschalter, als ein Kippschalter o. dgl. ausgebildet ist. Das Schaltelement 20b ist zu einem Schalten zwischen den Drehrichtungsmodi durch das Aktivierungselement 22b mechanisch betätigbar. Das Schaltelement 20b weist eine Mehrzahl von, insbesondere mit den Schaltstellungen des Betätigungselements 18b korrespondierenden, Schaltstufen auf. Das Schaltelement 20b weist eine erste Schaltstufe entsprechend einem ersten Drehrichtungsmodus, eine zweite Schaltstufe entsprechend einem zweiten Drehrichtungsmodus und eine dritte Schaltstufe entsprechend einer Neutralstellung des Betätigungselements 18b auf. Das Schaltelement 20b ist in unterschiedlichen Schaltstellungen des Betätigungselements 18b unterschiedlich betätigbar, insbesondere in unterschiedliche Schaltstufen schaltbar. Das Aktivierungselement 22b, insbesondere der erste Schaltfortsatz 102b und/oder der zweite Schaltfortsatz 104b, kann das Schaltelement 20b entsprechend unterschiedlichen Schaltstellungen des Betätigungselements 18b unterschiedlich betätigen, insbesondere in unterschiedliche Schaltstufen schalten. Das Schaltelement 20b stellt der Elektronikeinheit 76b in Abhängigkeit von der Schaltstufe ein elektrisches bzw. elektronisches Signal bereit. Die Elektronikeinheit 76b schaltet in Abhängigkeit von dem elektrischen bzw. elektronischen Signal das Getriebe 60b und/oder einen Motor 54b der Antriebsstrangeinheit 12b in einen entsprechenden Drehrichtungsmodus.

Das Verschiebungselement 24b ist rotatorisch um die Abtriebsachse 26b beweglich an dem Getriebegehäuse 62b gelagert. Das Verschiebungselement 24b ist zumindest im Wesentlichen ringförmig um das Getriebegehäuse 62b angeordnet. Das Verschiebungselement 24b ist dazu vorgesehen, ein Gangschaltelement 14b der Antriebsstrangeinheit 12b zu einem Schalten zwischen den Geschwindigkeitsmodi entlang der Abtriebsachse 26b zu betätigen. Das Gangschaltelement 14b ist als ein Bolzen ausgebildet. Das Gangschaltelement 14b ist mit einem Schaltrad 68b des Getriebes 60b wirkverbunden. Das Verschiebungselement 24b weist zumindest eine Schaltkulisse 28b auf. Die Schaltkulisse 28b ist zu einer Betätigung des Gangschaltelements 14b, insbesondere entlang der Abtriebsachse 26b der Antriebsstrangeinheit 12b, vorgesehen. Die Schaltkulisse 28b ist als eine zumindest im Wesentlichen schlitzartige Ausnehmung in dem Verschiebungselement 24b ausgebildet. Die Schaltkulisse 28b erstreckt sich zumindest entlang eines Teilumfangs des Verschiebungselements 24b. Die Schaltkulisse 28b umfasst einen ersten Abschnitt 106b, der sich zumindest im Wesentlichen senkrecht zu der Abtriebsachse 26b erstreckt. Die Schaltkulisse 28b umfasst zumindest einen zweiten Abschnitt 108b, der entlang der Abtriebsachse 26b versetzt zu dem ersten Abschnitt 106b angeordnet ist. Die Schaltkulisse 28b umfasst zwei zweite Abschnitte 108b. Die zweiten Abschnitte 108b erstrecken sich zumindest im Wesentlichen senkrecht zu der Abtriebsachse 26b. Die Schaltkulisse 28b umfasst zwei dritte Abschnitte 110b, die sich winklig zu der Abtriebsachse 26b erstrecken. Jeweils einer der dritten Abschnitte 110b verbindet jeweils einen der zweiten Abschnitte 108b mit dem ersten Abschnitt 106b.

Das Verschiebungselement 24b ist entlang der Abtriebsachse 26b zumindest im Wesentlichen unbeweglich an dem Getriebegehäuse 62b gelagert. Das Gangschaltelement 14b ist zumindest abschnittsweise in der Schaltkulisse 28b angeordnet. Das Gangschaltelement 14b erstreckt sich zumindest abschnittsweise zumindest im Wesentlichen senkrecht zu der Abtriebsachse 26b in der Schaltkulisse 28b. Die Schaltkulisse 28b weist eine Breite auf, die zumindest im Wesentlichen einem Durchmesser des Gangschaltelements 14b entspricht. Die Schaltkulisse 28b ist dazu vorgesehen, das Gangschaltelement 14b zu verschieben. Die Schaltkulisse 28b ist dazu vorgesehen, das Gangschaltelement 14b in Folge einer Rotationsbewegung des Verschiebungselements 24b um die Abtriebsachse 26b zumindest im Wesentlichen parallel zu der Abtriebsachse 26b zu verschieben. Das Gangschaltelement 14b gleitet in Folge einer Rotationsbewegung des Verschiebungselements 24b innerhalb und entlang der Schaltkulisse 28b, insbesondere einer Formgebung der Schaltkulisse 28b folgend. Das Gangschaltelement 14b wird durch eine Drehung des Verschiebungselements 24b zumindest zwischen dem ersten Abschnitt 106b der Schaltkulisse 28b und den zweiten Abschnitten 108b der Schaltkulisse 28b, insbesondere über die dritten Abschnitte 110b der Schaltkulisse 28b, verschoben. Eine Verschiebung des Gangschaltelements 14b zwischen dem ersten Abschnitt 106b der Schaltkulisse 28b und einem zweiten Abschnitt 108b der Schaltkulisse 28b entspricht einer Verschiebung des Gangschaltelements 14b und des Schaltrads 68b entlang der Abtriebsachse 26b. Eine Position des Gangschaltelements 14b in dem ersten Abschnitt 106b der Schaltkulisse 28b entspricht dem zweiten Geschwindigkeitsmodus. Eine Position des Gangschaltelements 14b in dem zweiten Abschnitt 108b der Schaltkulisse 28b entspricht dem ersten Geschwindigkeitsmodus. Das Verschiebungselement 24b rotiert in Folge einer Rotation des Betätigungselements 18b um die Abtriebsachse 26b um die Abtriebsachse 26b. Das Verschiebungselement 24b ist über das Aktivierungselement 22b mechanisch mit dem Betätigungselement 18b verbunden.

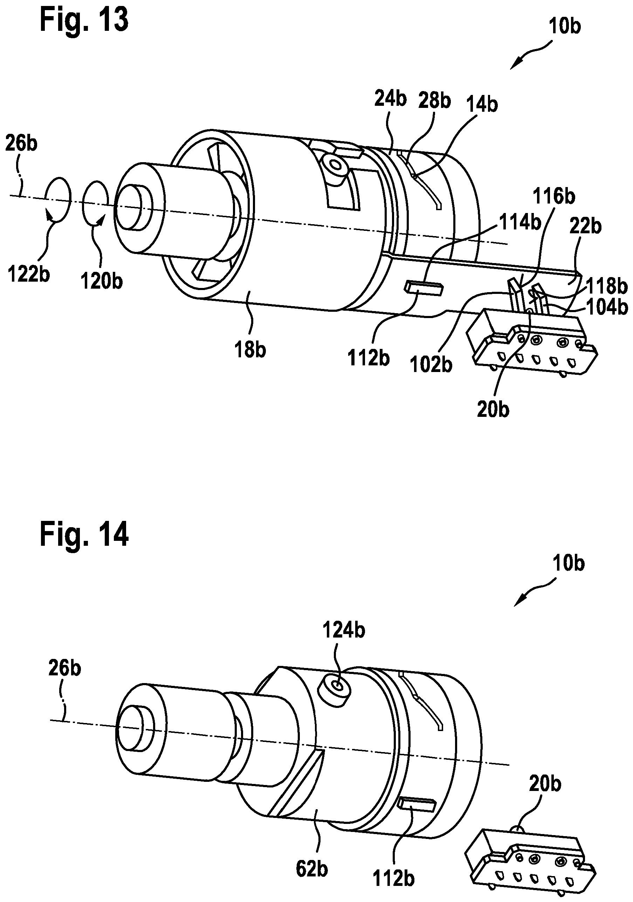

Figur 13 zeigt die Werkzeugmaschinenvorrichtung 10b in einer perspektivischen Darstellung. Das Verschiebungselement 24b weist einen Befestigungsfortsatz 112b auf. Der Befestigungsfortsatz 112b ist auf einer dem Aktivierungselement 22b zugewandten Seite des Verschiebungselements 24b an dem Verschiebungselement 24b angeordnet. Der Befestigungsfortsatz 112b greift in eine Befestigungsausnehmung 114b des Aktivierungselements 22b ein. Das Aktivierungselement 22b ist über die Befestigungsausnehmung 114b und den Befestigungsfortsatz 112b kraft- und/oder formschlüssig an dem Verschiebungselement 24b fixiert. Alternativ ist denkbar, dass das Aktivierungselement 22b stoffschlüssig an dem Verschiebungselement 24b fixiert ist oder einteilig mit dem Verschiebungselement 24b ausgebildet ist. Das Aktivierungselement 22b koppelt über die Befestigungsausnehmung 114b und den Befestigungsfortsatz 112b das Verschiebungselement 24b mit dem Betätigungselement 18b. Eine Rotation des Betätigungselements 18b wird über das Aktivierungselement 22b auf das Verschiebungselement 24b übertragen. Eine Rotation des Betätigungselements 18b um einen bestimmten Winkel entspricht einer Rotation des Verschiebungselements 24b um denselben Winkel. Durch eine gleichzeitige Rotation des Aktivierungselements 22b und des Verschiebungselements 24b in Folge einer Betätigung des Betätigungselements 18b wird gleichzeitig zwischen den Drehrichtungsmodi und den Geschwindigkeitsmodi geschalten. Das Verschiebungselement 24b schaltet mittels der Schaltkulisse 28b über das Gangschaltelement 14b die Geschwindigkeitsmodi. Das Aktivierungselement 22b schaltet mittels des ersten Schaltfortsatzes 102b und/oder mittels des zweiten Schaltfortsatzes 104b über das Schaltelement 20b die Drehrichtungsmodi.

In Folge einer Drehung des Aktivierungselements 22b gleitet das Schaltelement 20b entlang einer Innenfläche 116b des ersten Schaltfortsatzes 102b oder entlang einer Innenfläche 118b des zweiten Schaltfortsatzes 104b. Durch die zu der Abtriebsachse 26b winklige Anordnung des ersten Schaltfortsatzes 102b und des zweiten Schaltfortsatzes 104b wirken der erste Schaltfortsatz 102b und der zweite Schaltfortsatz 104b als Rampen. Der erste Schaltfortsatz 102b und der zweite Schaltfortsatz 104b wandeln eine Rotationsbewegung des Betätigungselements 18b und des mit dem Betätigungselement 18b gekoppelten Aktivierungselements 22b um die Abtriebsachse 26b in eine Translationsbewegung des Schaltelements 20b zumindest im Wesentlichen parallel zu der Abtriebsachse 26b. In Folge einer Rotationsbewegung des Betätigungselements 18b und des mit dem Betätigungselement 18b gekoppelten Aktivierungselements 22b entlang einer ersten Drehrichtung 120b um die Abtriebsachse 26b gleitet das Schaltelement 20b entlang der Innenfläche 116b des ersten Schaltfortsatzes 102b und wird durch den ersten Schaltfortsatz 102b zumindest im Wesentlichen parallel zu der Abtriebsachse 26b in Richtung des zweiten Schaltfortsatzes 104b verschoben. Das Getriebe 60b und/oder der Motor 54b werden in Folge einer Rotationsbewegung des Betätigungselements 18b entlang der ersten Drehrichtung 120b um die Abtriebsachse 26b in den ersten Drehrichtungsmodus geschalten. In Folge einer Rotationsbewegung des Betätigungselements 18b und des mit dem Betätigungselement 18b gekoppelten Aktivierungselements 22b entlang einer zweiten, der ersten Drehrichtung 120b entgegengesetzten Drehrichtung 122b um die Abtriebsachse 26b gleitet das Schaltelement 20b entlang der Innenfläche 118b des zweiten Schaltfortsatzes 104b und wird durch den zweiten Schaltfortsatz 104b zumindest im Wesentlichen parallel zu der Abtriebsachse 26b in Richtung des ersten Schaltfortsatzes 102b verschoben. Das Getriebe 60b und/oder der Motor 54b werden in Folge einer Rotationsbewegung des Betätigungselements 18b entlang der zweiten Drehrichtung 122b um die Abtriebsachse 26b in den zweiten Drehrichtungsmodus geschalten.

Figur 14 zeigt einen Teil der Werkzeugmaschinenvorrichtung 10b in einer perspektivischen Darstellung. Eine Perspektive entspricht zumindest im Wesentlichen einer Perspektive in Figur 13. Das Betätigungselement 18b und das an dem Betätigungselement 18b fixierte Aktivierungselement 22b sind der Übersichtlichkeit halber nicht dargestellt. Das Verschiebungselement 24b ist zumindest im Wesentlichen ringförmig um das Getriebegehäuse 62b herum angeordnet. Gut zu erkennen ist der Befestigungsfortsatz 112b des Verschiebungselements 24b. Das Getriebegehäuse 62b umfasst einen Befestigungsknopf 124b. Der Befestigungsknopf 124b erstreckt sich zumindest abschnittsweise radial von der Abtriebsachse 26b weg. Der Befestigungsknopf 124b ist zu einer werkzeuglosen Montage des Betätigungselements 18b an dem Getriebegehäuse 62b vorgesehen. Der Befestigungsknopf 124b ist zu einer Begrenzung eines maximalen Rotationswinkels des Betätigungselements 18b um die Abtriebsachse 26b vorgesehen. Durch den Befestigungsknopf 124b ist das Schaltelement 20b in jeder Schaltstellung des Betätigungselements 18b zwischen dem ersten Schaltfortsatz 102b und dem zweiten Schaltfortsatz 104b angeordnet.

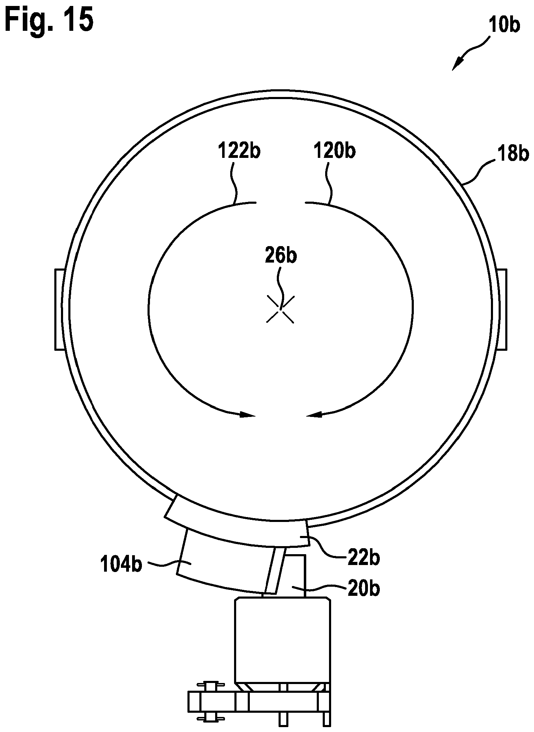

Figur 15 zeigt eine Frontalansicht der Werkzeugmaschinenvorrichtung 10b in einer schematischen Darstellung. Dargestellt ist der zweite Schaltfortsatz 104b. Das Schaltelement 20b ist zwischen dem ersten Schaltfortsatz 102b und dem zweiten Schaltfortsatz 104b angeordnet. Das Schaltelement 20b ist durch eine Rotation des Betätigungselements 18b und des mit dem Betätigungselement 18b gekoppelten Aktivierungselements 22b entlang der ersten Drehrichtung 120b oder entlang der zweiten Drehrichtung 122b um die Abtriebsachse 26b zumindest im Wesentlichen parallel zu der Abtriebsachse 26b verschiebbar. Das Schaltelement 20b ist durch eine Rotation des Betätigungselements 18b und des mit dem Betätigungselement 18b gekoppelten Aktivierungselements 22b entlang der ersten Drehrichtung 120b oder entlang der zweiten Drehrichtung 122b um die Abtriebsachse 26b in eine Zeichenebene oder aus einer Zeichenebene heraus verschiebbar.

## Patentansprüche

1. Werkzeugmaschinenvorrichtung mit zumindest einer Antriebsstrangeinheit (12a; 12b), die zumindest ein Gangschaltelement (14a; 14b) umfasst und die zumindest zwei verschiedene Drehrichtungsmodi und zumindest zwei verschiedene Geschwindigkeitsmodi aufweist, und mit zumindest einer zumindest teilweise an der Antriebsstrangeinheit (12a; 12b) angeordneten Schalteinheit (16a; 16b), wobei die Schalteinheit (16a; 16b) zumindest ein Betätigungselement (18a; 18b), das zu einer Auswahl der Drehrichtungsmodi und der Geschwindigkeitsmodi vorgesehen ist, und zumindest ein Schaltelement (20a; 20b) umfasst, das dazu vorgesehen ist, in Abhängigkeit von einer Schaltstellung des Betätigungselements (18a; 18b) zwischen den Drehrichtungsmodi zu schalten, **dadurch gekennzeichnet, dass** das Betätigungselement (18a; 18b) zumindest im Wesentlichen ringförmig um die Antriebsstrangeinheit (12a; 12b) angeordnet ist.

2. Werkzeugmaschinenvorrichtung nach Anspruch 1, **dadurch gekennzeichnet, dass** die Schalteinheit (16a; 16b) zumindest ein dem Betätigungselement (18a; 18b) zugeordnetes Aktivierungselement (22a; 22b) umfasst, das dazu vorgesehen ist, das Schaltelement (20a; 20b), insbesondere zu einer Erfassung einer Schaltstellung des Betätigungselements (18a; 18b), zu betätigen.

3. Werkzeugmaschinenvorrichtung nach Anspruch 2, **dadurch gekennzeichnet, dass** das Aktivierungselement (22b) zu einer mechanischen Betätigung des Schaltelements (20b) vorgesehen ist.

4. Werkzeugmaschinenvorrichtung nach einem der vorhergehenden Ansprüche 2 oder 3, **dadurch gekennzeichnet, dass** das Aktivierungselement (22a) zu einer berührungslosen, insbesondere magnetischen, Betätigung des Schaltelements (20a) vorgesehen ist.

5. Werkzeugmaschinenvorrichtung nach Anspruch 4, **dadurch gekennzeichnet, dass** das Schaltelement (20a) als ein Sensor, insbesondere als ein Hall-Sensor, ausgebildet ist.

6. Werkzeugmaschinenvorrichtung nach Anspruch 4 oder 5, **dadurch gekennzeichnet, dass** das Schaltelement (20b) als ein mechanischer Schalter oder ein Signalschalter ausgebildet ist.

7. Werkzeugmaschinenvorrichtung nach einem der vorhergehenden Ansprüche, **dadurch gekennzeichnet, dass** die Schalteinheit (16a; 16b) zumindest ein mit dem Betätigungselement (18a; 18b) wirkverbundenes Verschiebungselement (24a; 24b) aufweist, das dazu vorgesehen ist, in Abhängigkeit von einer Schaltstellung des Betätigungselements (18a; 18b) zwischen den Geschwindigkeitsmodi zu schalten.

8. Werkzeugmaschinenvorrichtung nach Anspruch 7, **dadurch gekennzeichnet, dass** das Verschiebungselement (24a; 24b) dazu vorgesehen ist, das mit dem Verschiebungselement (24a; 24b) wirkverbundene Gangschaltelement (14a; 14b) zu einem Schalten zwischen den Geschwindigkeitsmodi, insbesondere entlang einer Abtriebsachse (26a; 26b) der Antriebsstrangeinheit (12a; 12b), zu betätigen.

9. Werkzeugmaschinenvorrichtung nach Anspruch 7 oder 8, **dadurch gekennzeichnet, dass** das Betätigungselement (18a) und/oder das Verschiebungselement (24a) zu einer Betätigung des Verschiebungselements (24a) zumindest abschnittsweise rampenartig ausgebildet sind/ist.

10. Werkzeugmaschinenvorrichtung nach einem der Ansprüche 7 bis 9, **dadurch gekennzeichnet, dass** das Verschiebungselement (24a) entlang einer Abtriebsachse (26a) der Antriebsstrangeinheit (12a) beweglich an der Antriebsstrangeinheit (12a) gelagert, insbesondere federgelagert, ist.

11. Werkzeugmaschinenvorrichtung nach einem der Ansprüche 7 bis 10, **dadurch gekennzeichnet, dass** das Verschiebungselement (24b) zumindest eine Schaltkulisse (28b) zu einer Betätigung des Gangschaltelements (14b), insbesondere entlang einer Abtriebsachse (26b) der Antriebsstrangeinheit (12b), aufweist.

12. Werkzeugmaschinenvorrichtung nach einem der Ansprüche 7 bis 11, **dadurch gekennzeichnet, dass** das Verschiebungselement (24a) zumindest im Wesentlichen ringförmig um die Antriebsstrangeinheit (12a), insbesondere um ein Getriebegehäuse (62a), angeordnet ist.

13. Werkzeugmaschinenvorrichtung nach einem der vorhergehenden Ansprüche, **dadurch gekennzeichnet, dass** die Schalteinheit (16a; 16b) zumindest eine Ausgabeeinheit (30a; 30b) zu einer optischen, akustischen und/oder haptischen Ausgabe in Abhängigkeit von einer Betätigung und/oder Schaltstellung des Betätigungselements (18a; 18b) aufweist.

14. Werkzeugmaschinenvorrichtung nach einem der vorhergehenden Ansprüche, **dadurch gekennzeichnet, dass** die Schalteinheit (16a; 16b) zu einer Auswahl der Drehrichtungsmodi und der Geschwindigkeitsmodi ein einzelnes Betätigungselement (18a; 18b) aufweist.

15. Werkzeugmaschine, insbesondere Handwerkzeugmaschine, mit zumindest einer Werkzeugmaschinenvorrichtung nach einem der vorhergehenden Ansprüche.

## Claims

1. Power tool device having at least one drive train unit (12a; 12b) which comprises at least one gear shift element (14a; 14b) and which has at least two different direction-of-rotation modes and at least two different speed modes, and having at least one switching unit (16a; 16b), which is arranged at least partially on the drive train unit (12a; 12b), wherein the switching unit (16a; 16b) comprises at least one actuation element (18a; 18b) that is designed for selection of the direction-of-rotation modes and the speed modes, and at least one switching element (20a; 20b) that is intended to switch between the direction-of-rotation modes depending on a switching position of the actuation element (18a; 18b), **characterized in that** the actuation element (18a; 18b) is arranged at least substantially in the form of a ring around the drive train unit (12a; 12b).

2. Power tool device according to Claim 1, **characterized in that** the switching unit (16a; 16b) comprises at least one activation element (22a; 22b), which is assigned to the actuation element (18a; 18b) and which is intended to actuate the switching element (20a; 20b), in particular to sense a switching position of the actuation element (18a; 18b) .

3. Power tool device according to Claim 2, **characterized in that** the activation element (22b) is intended for mechanical actuation of the switching element (20b).

4. Power tool device according to either of the preceding Claims 2 and 3, **characterized in that** the activation element (22a) is intended for contactless, in particular magnetic, actuation of the switching element (20a).

5. Power tool device according to Claim 4, **characterized in that** the switching element (20a) is in the form of a sensor, in particular of a Hall sensor.

6. Power tool device according to Claim 4 or 5, **characterized in that** the switching element (20b) is in the form of a mechanical switch or a signal switch.

7. Power tool device according to any of the preceding claims, **characterized in that** the switching unit (16a; 16b) has at least one displacement element (24a; 24b), which is operatively connected to the actuation element (18a; 18b) and which is intended to switch between the speed modes depending on a switching position of the actuation element (18a; 18b) .

8. Power tool device according to Claim 7, **characterized in that** the displacement element (24a; 24b) is intended to actuate the gear shift element (14a; 14b) operatively connected to the displacement element (24a; 24b), in particular along an output axis (26a; 26b) of the drive train unit (12a; 12b), for the purpose of switching between the speed modes.

9. Power tool device according to Claim 7 or 8, **characterized in that,** for the purpose of actuating the displacement element (24a), the actuation element (18a) and/or the displacement element (24a) are/is at least partially in the form of a ramp.

10. Power tool device according to any of Claims 7 to 9, **characterized in that** the displacement element (24a) is mounted, in particular spring-mounted, on the drive train unit (12a) so as to be movable along an output axis (26a) of the drive train unit (12a).

11. Power tool device according to any of Claims 7 to 10, **characterized in that** the displacement element (24b) has at least one shift gate (28b) for actuating the gear shift element (14b), in particular along an output axis (26b) of the drive train unit (12b).

12. Power tool device according to any of Claims 7 to 11, **characterized in that** the displacement unit (24a) is arranged at least substantially in the form of a ring around the drive train unit (12a), in particular around a transmission housing (62a).

13. Power tool device according to any of the preceding claims, **characterized in that** the switching unit (16a; 16b) has at least one output unit (30a; 30b) for optical, acoustic and/or haptic output depending on an actuation and/or switching position of the actuation element (18a; 18b).

14. Power tool device according to any of the preceding claims, **characterized in that** the switching unit (16a; 16b) has a single actuation element (18a; 18b) for selection of the direction-of-rotation modes and the speed modes.

15. Power tool, in particular hand-held power tool, having at least one power tool device according to any of the preceding claims.

## Revendications

1. Dispositif de machine-outil comportant au moins une unité de chaîne cinématique (12a ; 12b) qui comprend au moins un élément de changement de rapport (14a ; 14b) et qui présente au moins deux modes de sens de rotation différents et au moins deux modes de vitesse différents, et comportant au moins une unité de commutation (16a ; 16b) disposée au moins partiellement sur l'unité de chaîne cinématique (12a ; 12b), l'unité de commutation (16a ; 16b) comprenant au moins un élément d'actionnement (18a ; 18b), qui est prévu pour une sélection des modes de sens de rotation et des modes de vitesse, et au moins un élément de commutation (20a ; 20b), qui est prévu pour commuter entre les modes de sens de rotation en fonction d'une position de commutation de l'élément d'actionnement (18a ; 18b), **caractérisé en ce que** l'élément d'actionnement (18a ; 18b) est disposé au moins sensiblement de manière annulaire autour de l'unité de chaîne cinématique (12a ; 12b).

2. Dispositif de machine-outil selon la revendication 1, **caractérisé en ce que** l'unité de commutation (16a ; 16b) comprend au moins un élément d'activation (22a ; 22b) associé à l'élément d'actionnement (18a ; 18b), lequel élément d'activation est prévu pour actionner l'élément de commutation (20a ; 20b), en particulier pour une détection d'une position de commutation de l'élément d'actionnement (18a ; 18b).

3. Dispositif de machine-outil selon la revendication 2, **caractérisé en ce que** l'élément d'activation (22b) est prévu pour un actionnement mécanique de l'élément de commutation (20b).

4. Dispositif de machine-outil selon l'une des revendications précédentes 2 ou 3, **caractérisé en ce que** l'élément d'activation (22a) est prévu pour un actionnement sans contact, en particulier magnétique, de l'élément de commutation (20a).

5. Dispositif de machine-outil selon la revendication 4, **caractérisé en ce que** l'élément de commutation (20a) est réalisé sous la forme d'un capteur, en particulier sous la forme d'un capteur de Hall.

6. Dispositif de machine-outil selon la revendication 4 ou 5, **caractérisé en ce que** l'élément de commutation (20b) est réalisé sous la forme d'un commutateur mécanique ou d'un commutateur de signaux.

7. Dispositif de machine-outil selon l'une des revendications précédentes, **caractérisé en ce que** l'unité de commutation (16a ; 16b) présente au moins un élément de déplacement (24a ; 24b) relié fonctionnellement à l'élément d'actionnement (18a ; 18b), lequel élément de déplacement est prévu pour commuter entre les modes de vitesse en fonction d'une position de commutation de l'élément d'actionnement (18a ; 18b).

8. Dispositif de machine-outil selon la revendication 7, **caractérisé en ce que** l'élément de déplacement (24a ; 24b) est prévu pour actionner l'élément de changement de rapport (14a ; 14b) relié fonctionnellement à l'élément de déplacement (24a ; 24b) pour une commutation entre les modes de vitesse, en particulier le long d'un axe de sortie (26a ; 26b) de l'unité de chaîne cinématique (12a ; 12b).

9. Dispositif de machine-outil selon la revendication 7 ou 8, **caractérisé en ce que** l'élément d'actionnement (18a) et/ou l'élément de déplacement (24a) est/sont réalisé(s) en forme de rampe au moins dans certaines parties pour un actionnement de l'élément de déplacement (24a) .

10. Dispositif de machine-outil selon l'une des revendications 7 à 9, **caractérisé en ce que** l'élément de déplacement (24a) est monté, en particulier monté sur ressort, sur l'unité de chaîne cinématique (12a) de manière mobile le long d'un axe de sortie (26a) de l'unité de chaîne cinématique (12a).

11. Dispositif de machine-outil selon l'une des revendications 7 à 10, **caractérisé en ce que** l'élément de déplacement (24b) présente au moins une coulisse de commutation (28b) pour un actionnement de l'élément de changement de rapport (14b), en particulier le long d'un axe de sortie (26b) de l'unité de chaîne cinématique (12b) .

12. Dispositif de machine-outil selon l'une des revendications 7 à 11, **caractérisé en ce que** l'élément de déplacement (24a) est disposé au moins sensiblement de manière annulaire autour de l'unité de chaîne cinématique (12a), en particulier autour d'un carter de transmission (62a).

13. Dispositif de machine-outil selon l'une des revendications précédentes, **caractérisé en ce que** l'unité de commutation (16a ; 16b) présente au moins une unité de sortie (30a ; 30b) pour une sortie optique, acoustique et/ou haptique en fonction d'un actionnement et/ou de la position de commutation de l'élément d'actionnement (18a ; 18b).

14. Dispositif de machine-outil selon l'une des revendications précédentes, **caractérisé en ce que** l'unité de commutation (16a ; 16b) présente un seul élément d'actionnement (18a ; 18b) pour une sélection des modes de sens de rotation et des modes de vitesse.

15. Machine-outil, en particulier machine-outil à main, comportant au moins un dispositif de machine-outil selon l'une des revendications précédentes.
